# EUROPEAN PATENT APPLICATION

(11) **EP 4 697 457 A1**
(43) Date of publication of application: **18.02.2026**
(21) Application number: 24803449.8
(22) Date of filing: 02.05.2024
(51) Int. Cl.: H01M 12/08, B01D 53/32, C01B 32/50

(54) **CARBON DIOXIDE ADSORPTION BATTERY, CHARGE/DISCHARGE DEVICE, AND CARBON DIOXIDE CONCENTRATION DEVICE**

(30) Priority: 11.05.2023 JP 2023078888
(71) Applicant: Kuraray Co., Ltd., Kurashiki-shi, Okayama 710-0801 (JP)
(72) Inventor: IWASAKI, Hideharu, Osaka-shi, Osaka 530-8611 (JP); MATSUSHITA, Minoru, Bizen-shi, Okayama 705-0025 (JP); ARIMA, Junichi, Osaka-shi, Osaka 530-8611 (JP); NAMBA, Aya, Osaka-shi, Osaka 530-8611 (JP)
(74) Representative: Müller-Boré & Partner Patentanwälte PartG mbB
(86) International application number: PCT/JP2024/016880
(87) International publication number: WO 2024/232337

(57) **Abstract**

One aspect of the present invention is a carbon dioxide adsorption battery including a pair of electrodes, a separator arranged between the pair of electrodes, electrolytes respectively arranged between the pair of electrodes and the separator, and a pair of flow paths respectively connected to the pair of electrodes, in which each of the pair of electrodes is an electrode permeable to gas, and the electrolytes each contain an electrolytic solution capable of dissolving carbon dioxide and a compound capable of absorbing and desorbing carbon dioxide by an electrochemical reaction.

## Description

### Technical Field

The present invention relates to a carbon dioxide adsorption battery, a charge/discharge device, and a carbon dioxide concentration device.

### Background Art

Carbon dioxide is not only a substance that occupies about 0.04% of the atmosphere and is widely present on the earth, but is also widely used in industry. Examples of a method of utilizing carbon dioxide include foaming gas for a carbonated beverage, a bath agent, a fire extinguishing agent, and the like, dry ice used for cooling and the like, and air for emergency replenishment to a bicycle tire. Further, carbon dioxide can also be used as an extraction solvent for extracting caffeine and the like by being brought into a supercritical state. Further, carbon dioxide is also used for carbon dioxide lasers used for a laser used for processing in an industrial field, a medical laser scalpel, and the like. Furthermore, carbon dioxide may also be used as a refrigerant of a compressor instead of a fluorocarbon refrigerant. Further, also in an agricultural field, carbon dioxide is used, for example, in accelerated cultivation of strawberries, carbon dioxide fertilization for accelerating growth of plants such as an aquatic plant in an ornamental aquarium, and the like. Further, carbon dioxide is also used for controlled atmosphere (CA) storage of a fresh agricultural product.

Since carbon dioxide is used in various fields as described above, a method of obtaining carbon dioxide by, for example, separating carbon dioxide from gas containing carbon dioxide such as air is required. Further, carbon dioxide is also said to be a causative substance of global warming. For this reason as well, it is required to separate carbon dioxide from gas containing carbon dioxide and use carbon dioxide. In order to use carbon dioxide, for example, development of a method of separating carbon dioxide from gas containing carbon dioxide, a device that adsorbs and separates carbon dioxide, a device using carbon dioxide, and the like is required.

As a method of separating carbon dioxide from mixed gas containing oxygen and carbon dioxide such as air, various methods have been proposed. Examples of the separation method include a method of adsorbing carbon dioxide in air by using an adsorbent for carbon dioxide, and then desorbing the carbon dioxide adsorbed by the adsorbent to separate the carbon dioxide from the air. Examples of the adsorbent that adsorbs carbon dioxide include activated carbon, an amine-based solvent, and an aqueous potassium carbonate solution. Further, more specifically, examples of the method of separating carbon dioxide using an adsorbent include a pressure swing adsorption (PSA) method in which carbon dioxide is adsorbed to an adsorbent under high pressure and then decompression is performed so that carbon dioxide is desorbed from the adsorbent. Examples of an adsorbent used for separating carbon dioxide by the PSA method include an adsorbent described in Patent Literature 1.

Patent Literature 1 describes a carbon dioxide adsorbent including a composition in which 2 to 80 equivalent percent of sodium ions of sodium-containing aluminosilicate are ion exchanged with barium ions. Patent Literature 1 discloses that an adsorbent having a high selectivity ratio for carbon dioxide and large absorption capacity even under a condition of a large amount of moisture can be provided. Further, Patent Literature 1 discloses that this adsorbent can be suitably used for separating and concentrating carbon dioxide by the PSA method.

Examples of a device that adsorbs and separates carbon dioxide include an acidic gas adsorption and desorption device described in Patent Literature 2 and a carbon dioxide separation device described in Patent Literature 3.

Patent Literature 2 describes an acidic gas adsorption and desorption device including an acidic gas adsorption and desorption layer containing a compound capable of adsorbing and desorbing acidic gas such as carbon dioxide by performing oxidation and reduction and a base material, and a pair of electrodes sandwiching the acidic gas adsorption and desorption layer.

Patent Literature 3 describes a carbon dioxide separation device including an electrolyte layer, a pair of electrodes provided on the electrolyte layer with the electrolyte layer interposed between them, and a voltage application unit that applies voltage between the pair of electrodes, in which each of the pair of electrodes is an electrode permeable to gas, and the electrolyte layer contains an electrolytic solution capable of dissolving carbon dioxide and a redox compound having an N-oxy radical group in a molecule.

Examples of a device using carbon dioxide include batteries described in Non-Patent Literature 1 and Non-Patent Literature 2.

Non-Patent Literature 1 proposes a battery that is charged while absorbing carbon dioxide as a method of using carbon dioxide.

Non-Patent Literature 2 proposes a carbon dioxide charging battery incorporating a redox system. Specifically, a carbon dioxide charging battery using each of poly(1,4-anthraquinone) and polyvinylferrocene in a negative electrode and a positive electrode is proposed.

Examples of a device utilizing carbon dioxide include a secondary battery capable of concentrating carbon dioxide by adsorbing and desorbing carbon dioxide as well as utilizing carbon dioxide. Examples of such a secondary battery include a carbon dioxide adsorption battery described in Patent Literature 4.

Patent Literature 4 describes a carbon dioxide adsorption battery including a positive electrode, a negative electrode, a separator arranged between the positive electrode and the negative electrode, and electrolyte layers arranged between the positive electrode and the separator and between the negative electrode and the separator, in which the positive electrode is an electrode permeable to gas, the electrolyte layer contains an electrolytic solution capable of dissolving carbon dioxide and a redox compound having an N-oxy radical group in a molecule, and the separator suppresses permeation of the redox compound and is permeable to the electrolytic solution.

A device capable of utilizing carbon dioxide is required to be able to more effectively utilize carbon dioxide and more efficiently separate carbon dioxide from gas containing carbon dioxide. That is, such a device capable of utilizing carbon dioxide is required to more efficiently adsorb and desorb carbon dioxide.

### Citation List

### Patent Literatures

Patent Literature 1: JP H7-39752 A
Patent Literature 2: JP 2015-36128 A
Patent Literature 3: JP 2018-1131 A
Patent Literature 4: WO 2022/185903 A

### Non Patent Literatures

Non-Patent Literature 1: Aliza Khurram et al., "Tailoring the Discharge Reaction in Li-CO2 Batteries through Incorporation of CO2 Capture Chemistry", Joule 2, 2649-2666, December 19, 2018
Non-Patent Literature 2: Sahag Voskian et al., "Faradaic electro-swing reactive adsorption for CO2 Capture", Energy & Environmental Science, 2019, 12, 3530-3547

### Summary of Invention

The present invention has been made in view of such circumstances, and an object of the present invention is to provide a carbon dioxide adsorption battery capable of efficiently performing charging while adsorbing carbon dioxide from gas containing carbon dioxide and desorbing the carbon dioxide during discharging. Further, an object of the present invention is to provide a charge/discharge device and a carbon dioxide concentration device including the carbon dioxide adsorption battery.

One aspect of the present invention is a carbon dioxide adsorption battery including a pair of electrodes, a separator arranged between the pair of electrodes, electrolytes respectively arranged between the pair of electrodes and the separator, and a pair of flow paths respectively connected to the pair of electrodes, in which each of the pair of electrodes is an electrode permeable to gas, and the electrolytes each contain an electrolytic solution capable of dissolving carbon dioxide and a compound capable of absorbing and desorbing carbon dioxide by an electrochemical reaction.

Another aspect of the present invention is a carbon dioxide adsorption battery including a pair of electrodes, a separator arranged between the pair of electrodes, and a pair of flow paths respectively connected to the pair of electrodes, in which each of the pair of electrodes is an electrode permeable to gas, and the pair of electrodes contain an electrolyte containing an electrolytic solution capable of dissolving carbon dioxide and a compound capable of absorbing and desorbing carbon dioxide by an electrochemical reaction.

The above and other objects, features, and advantages of the present invention will become clear from detailed description below and the accompanying drawings.

### Brief Description of Drawings

FIG. 1 is a schematic cross-sectional view illustrating an example of a configuration at the time of charge in a carbon dioxide adsorption battery according to a first embodiment of the present invention.
FIG. 2 is a schematic cross-sectional view illustrating an example of a configuration at the time of discharge in the carbon dioxide adsorption battery according to the first embodiment of the present invention.
FIG. 3 is a schematic cross-sectional view illustrating another example of the configuration at the time of charge in the carbon dioxide adsorption battery according to the first embodiment of the present invention (an example of the configuration at the time of charge by electrode reversal from the time of charging illustrated in FIG. 1).
FIG. 4 is a schematic cross-sectional view illustrating another example of the configuration at the time of discharge in the carbon dioxide adsorption battery according to the first embodiment of the present invention (an example of the configuration at the time of discharge after charging by electrode reversal from the time of charging illustrated in FIG. 1).
FIG. 5 is a schematic cross-sectional view illustrating an example of a configuration at the time of charge before electrode reversal in the carbon dioxide adsorption battery according to the first embodiment of the present invention.
FIG. 6 is a schematic cross-sectional view illustrating an example of a configuration at the time of charge after electrode reversal (electrode reversal from the time of charging illustrated in FIG. 5) in the carbon dioxide adsorption battery according to the first embodiment of the present invention.
FIG. 7 is a schematic cross-sectional view illustrating an example of a configuration at the time of charge in the carbon dioxide adsorption battery according to a second embodiment of the present invention.
FIG. 8 is a schematic cross-sectional view illustrating an example of a configuration at the time of discharge in the carbon dioxide adsorption battery according to the second embodiment of the present invention.
FIG. 9 is a schematic cross-sectional view illustrating another example of the configuration at the time of charge in the carbon dioxide adsorption battery according to the second embodiment of the present invention (an example of the configuration at the time of charge by electrode reversal from the time of charging illustrated in FIG. 7).
FIG. 10 is a schematic cross-sectional view illustrating another example of the configuration at the time of discharge in the carbon dioxide adsorption battery according to the second embodiment of the present invention (an example of the configuration at the time of discharge after charging by electrode reversal from the time of charging illustrated in FIG. 7).
FIG. 11 is a schematic view illustrating an example of a configuration of a charge/discharge device according to a third embodiment of the present invention.
FIG. 12 is a schematic view illustrating an example of a state before electrode reversal in the charge/discharge device according to the third embodiment of the present invention.
FIG. 13 is a schematic view illustrating an example of a state after electrode reversal in the charge/discharge device according to the third embodiment of the present invention.

### Description of Embodiments

Hereinafter, embodiments according to the present invention will be described, but the present invention is not limited to these.

### [Carbon dioxide adsorption battery]

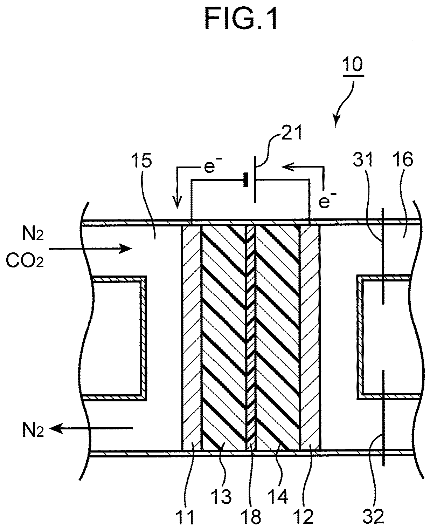

As illustrated in FIGS. 1 to 4, a carbon dioxide adsorption battery 10 according to a first embodiment of the present invention includes a pair of electrodes 11 and 12 (the first electrode 11 and the second electrode 12), a separator 18 arranged between the pair of electrodes 11 and 12, electrolytes 13 and 14 (the first electrolyte 13 and the second electrolyte 14) respectively arranged between the pair of electrodes 11 and 12 and the separator 18, and a pair of flow paths 15 and 16 (the first flow path 15 and the second flow path 16) respectively connected to the pair of electrodes 11 and 12. That is, the carbon dioxide adsorption battery 10 includes the separator 18, the electrolytes 13 and 14 provided on both surfaces of the separator 18, the pair of electrodes 11 and 12 provided on the electrolytes 13 and 14 with the electrolytes 13 and 14 interposed between them, and the pair of flow paths 15 and 16 respectively connected to the pair of electrodes 11 and 12. Each of the pair of electrodes 11 and 12 is an electrode permeable to gas. The electrolytes 13 and 14 are fractionated into the first electrolyte 13 and the second electrolyte 14 by the separator 18 to constitute a pair of the electrolytes 13 and 14. Each electrolyte constituting the first electrolyte 13 and the second electrolyte 14 contains an electrolytic solution capable of dissolving carbon dioxide and a compound capable of absorbing and desorbing carbon dioxide by an electrochemical reaction. Further, between the pair of electrodes 11 and 12, the first electrode 11 is provided on the first electrolyte 13, and the second electrode 12 is provided on the second electrolyte 14. Further, the first electrode 11 is connected to the first flow path 15 of the pair of flow paths 15 and 16, and the second electrode 12 is connected to the second flow path 16.

Each of the pair of electrodes 11 and 12 is an electrode permeable to gas. Specifically, the first electrode 11 allows gas flowing through the first flow path 15 to permeate to be brought into contact with the first electrolyte 13. Further, the first electrode 11 allows gas released from the first electrolyte 13 to permeate to be released into the first flow path 15. Further, the second electrode 12 allows gas flowing through the second flow path 16 to permeate to be brought into contact with the second electrolyte 14. Further, the second electrode 12 allows gas released from the second electrolyte 14 to permeate to be released into the first flow path 15. As described above, the pair of electrodes 11 and 12 allow gas present around each electrode to permeate. Further, the electrolytes 13 and 14 contain an electrolytic solution capable of dissolving carbon dioxide and a compound capable of absorbing and desorbing carbon dioxide by an electrochemical reaction. The separator 18 suppresses permeation of the compound and is permeable to the electrolytic solution. That is, the separator 18 is less permeable to the compound than to the electrolytic solution. Further, the separator 18 is preferably permeable to the electrolytic solution but not permeable to the compound. The flow paths 15 and 16 are not particularly limited as long as they are flow paths through which gas can flow. Further, the pair of flow paths 15 and 16 may include valves 31, 32, 33, and 34 as necessary. Specifically, the flow path 15 may include the valve 33 on the upstream side and the valve 34 on the downstream side. Further, the flow path 16 may include the valve 31 on the upstream side and the valve 32 on the downstream side. Note that FIGS. 1 to 4 illustrate only a valve that is closed and restricts flow of gas as the valves 31, 32, 33, and 34. The valves 31, 32, 33, and 34 are not particularly limited as long as they can restrict flow of gas in the pair of flow paths 15 and 16.

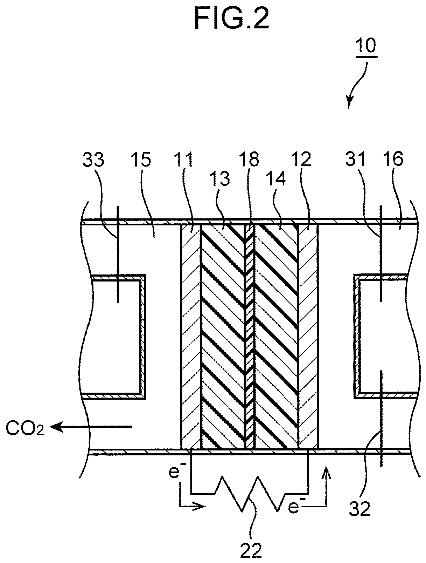

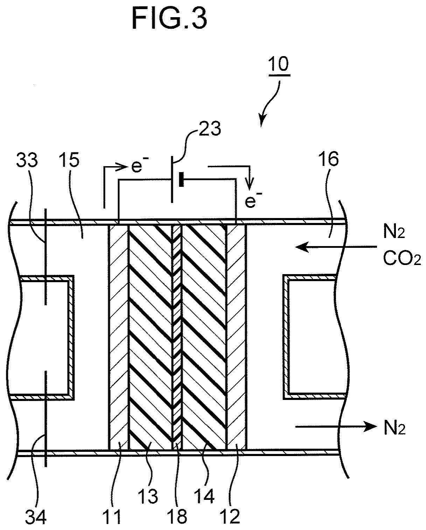

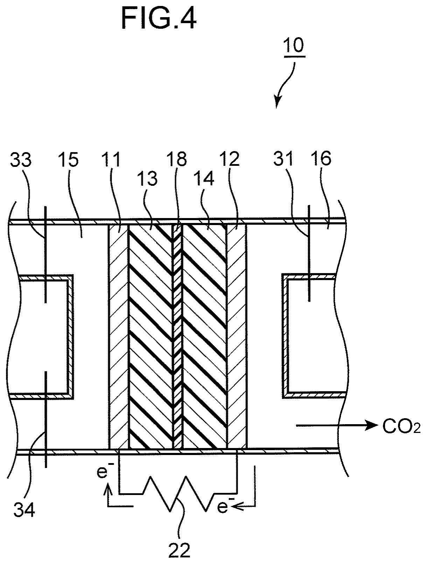

Note that FIG. 1 is a schematic cross-sectional view illustrating an example of a configuration at the time of charge in the carbon dioxide adsorption battery according to the first embodiment of the present invention. FIG. 2 is a schematic cross-sectional view illustrating an example of a configuration at the time of discharge in the carbon dioxide adsorption battery according to the first embodiment of the present invention. FIG. 3 is a schematic cross-sectional view illustrating another example of the configuration at the time of charge in the carbon dioxide adsorption battery according to the first embodiment of the present invention (an example of the configuration at the time of charge by electrode reversal from the time of charging illustrated in FIG. 1). FIG. 4 is a schematic cross-sectional view illustrating another example of the configuration at the time of discharge in the carbon dioxide adsorption battery according to the first embodiment of the present invention (an example of the configuration at the time of discharge after charging by electrode reversal from the time of charging illustrated in FIG. 1).

In the carbon dioxide adsorption battery 10, first, when gas containing carbon dioxide flows through the first flow path 15, the gas permeates the first electrode 11 and is brought into contact with the first electrolyte 13. Since the first electrolyte 13 contains an electrolytic solution capable of dissolving carbon dioxide as described above, carbon dioxide contained in the gas in contact with the first electrolyte 13 is dissolved in the first electrolyte 13. Note that gas containing carbon dioxide is not particularly limited as long as carbon dioxide is contained, and examples of the gas include gas containing carbon dioxide and nitrogen, and more specifically, air. The carbon dioxide adsorption battery 10 applies voltage between the pair of electrodes 11 and 12 such that potential of the first electrode 11 is lower than potential of the second electrode 12 as illustrated in FIG. 1 in the above-described situation. Voltage application for charging the carbon dioxide adsorption battery 10 may be performed, for example, by an application unit 21 that applies voltage between the pair of electrodes 11 and 12 so that potential of the first electrode 11 becomes lower than potential of the second electrode 12 as illustrated in FIG. 1. When voltage is applied in this manner, the compound contained in the first electrolyte 13 becomes in a state of being able to adsorb carbon dioxide by an electrochemical reaction. That is, voltage at which potential of the first electrode 11 is lower than potential of the second electrode 12 is voltage at which the compound becomes in a state of being able to adsorb carbon dioxide by an electrochemical reaction. Therefore, carbon dioxide dissolved in the first electrolyte 13 is adsorbed to the compound contained in the first electrolyte 13. Since the compound to which the carbon dioxide is adsorbed is less likely to move to the second electrolyte 14 side by the separator 18, when the carbon dioxide is adsorbed to the compound, the carbon dioxide adsorption battery 10 is in a state of being charged. Furthermore, since carbon dioxide dissolved in the electrolytic solution is adsorbed to the compound, dissolution of carbon dioxide in the electrolytic solution is promoted, and the carbon dioxide adsorption battery 10 suitably proceeds to a charged state. Further, in the carbon dioxide adsorption battery 10, as described above, since the compound is less likely to permeate through the separator 18, even if application of voltage between the pair of electrodes 11 and 12 is stopped, a state in which carbon dioxide is adsorbed to the compound, that is, a charged state is suitably maintained unless the pair of electrodes 11 and 12 are electrically connected and discharge is performed. The voltage application for charging the carbon dioxide adsorption battery 10 is not particularly limited as long as the voltage as described above can be applied. At this time, since there is no flow of gas in the second flow path 16, both the valve 31 on the upstream side and the valve 32 on the downstream side of the second flow path 16 may be closed.

After the above, in the carbon dioxide adsorption battery 10, the pair of electrodes 11 and 12 are electrically connected and discharge is performed. Specifically, as illustrated in FIG. 2, discharge of the carbon dioxide adsorption battery 10 may be performed by providing a resistor 22 between the pair of electrodes 11 and 12 to electrically connect the pair of electrodes 11 and 12. Then, the compound is no longer in a state of being able to adsorb carbon dioxide by an electrochemical reaction, and carbon dioxide adsorbed by the compound is desorbed from the compound. Therefore, in the carbon dioxide adsorption battery 10, carbon dioxide is released from the first electrode 11 to the first flow path 15 at the time of discharge. Gas released from the carbon dioxide adsorption battery 10 at the time of discharge is mainly gas adsorbed to the compound in the carbon dioxide adsorption battery 10 at the time of charge, that is, carbon dioxide, and the gas has very high carbon dioxide concentration. From this, the carbon dioxide adsorption battery 10 can concentrate carbon dioxide. Note that, at this time, since there is no flow of gas in the second flow path 16 similarly to the time of charging, both the valve 31 on the upstream side and the valve 32 on the downstream side of the second flow path 16 may be closed. Furthermore, since carbon dioxide is released into the first flow path 15, the valve 33 on the upstream side of the first flow path 15 is preferably closed in order to prevent backflow of carbon dioxide.

As illustrated in FIG. 3, the carbon dioxide adsorption battery 10 can also be charged by application of voltage between the pair of electrodes 11 and 12 such that potential of the second electrode 12 is lower than potential of the first electrode 11 in a state where gas containing carbon dioxide flows through the second flow path 16. That is, the carbon dioxide adsorption battery 10 can be charged also by reversing the electrode and applying voltage.

In the carbon dioxide adsorption battery 10, when gas containing carbon dioxide flows through the second flow path 16, the gas permeates the second electrode 12 and is brought into contact with the second electrolyte 14. Since the second electrolyte 14 contains an electrolytic solution capable of dissolving carbon dioxide similarly to the first electrolyte 13, carbon dioxide contained in the gas in contact with the second electrolyte 14 is dissolved in the second electrolyte 14. As described above, the carbon dioxide adsorption battery 10 applies voltage between the pair of electrodes 11 and 12 so that potential of the second electrode 12 becomes lower than potential of the first electrode 11. Voltage application for charging the carbon dioxide adsorption battery 10 may be performed, for example, by an application unit 23 that applies voltage between the pair of electrodes 11 and 12 so that potential of the second electrode 12 becomes lower than potential of the first electrode 11 as illustrated in FIG. 3. The application unit 21 and the application unit 23 may be voltage application units capable of switching between high and low potentials of the pair of electrodes 11 and 12. When voltage is applied in this manner, the compound contained in the second electrolyte 14 becomes in a state of being able to adsorb carbon dioxide by an electrochemical reaction. Therefore, carbon dioxide dissolved in the second electrolyte 14 is adsorbed to the compound contained in the second electrolyte 14, so that the carbon dioxide adsorption battery 10 is in a state of being charged. Note that, at this time, since there is no flow of gas in the first flow path 15, both the valve 33 on the upstream side and the valve 34 on the downstream side of the first flow path 15 may be closed.

After the above, in the carbon dioxide adsorption battery 10, the pair of electrodes 11 and 12 are electrically connected and discharge is performed. Specifically, as illustrated in FIG. 4, discharge of the carbon dioxide adsorption battery 10 may be performed by providing the resistor 22 between the pair of electrodes 11 and 12 to electrically connect the pair of electrodes 11 and 12. In this manner, carbon dioxide adsorbed to the compound is desorbed from the compound, and carbon dioxide is released from the second electrode 12 to the second flow path 16. Note that, at this time, since there is no flow of gas in the first flow path 15 similarly to the time of charging, both the valve 33 on the upstream side and the valve 34 on the downstream side of the first flow path 15 may be closed. Furthermore, since carbon dioxide is released into the second flow path 16, the valve 31 on the upstream side of the second flow path 16 is preferably closed in order to prevent backflow of carbon dioxide.

When voltage is applied to the pair of electrodes 11 and 12, the carbon dioxide adsorption battery 10 is charged and carbon dioxide is adsorbed to the compound, and when the pair of electrodes are electrically connected and discharge is performed, carbon dioxide adsorbed to the compound is desorbed from the compound. In the carbon dioxide adsorption battery 10, when voltage is applied between the pair of electrodes 11 and 12 in a manner that potential of the first electrode 11 is lower than potential of the second electrode 12, carbon dioxide is taken into the first electrolyte 13 from the first flow path 15 connected to the first electrode 11 and adsorbed to the compound. When voltage is applied between the pair of electrodes 11 and 12 in a manner that potential of the first electrode 11 is higher than potential of the second electrode 12, carbon dioxide is taken into the second electrolyte 14 from the second flow path 16 connected to the second electrode 12 and adsorbed to the compound. As described above, in the carbon dioxide adsorption battery 10, in the case of charging as illustrated in FIG. 1, the first electrode 11 is an electrode on the side of taking in carbon dioxide from gas containing carbon dioxide, and in the case of discharging as illustrated in FIG. 2, the first electrode 11 is an electrode on the side of releasing the carbon dioxide taken in at the time of charge. Further, in the carbon dioxide adsorption battery 10, in the case of charging as illustrated in FIG. 3, the second electrode 12 is an electrode on the side of taking in carbon dioxide from gas containing carbon dioxide, and in the case of discharging as illustrated in FIG. 4, the second electrode 12 is an electrode on the side of releasing the carbon dioxide taken in at the time of charge. That is, in the carbon dioxide adsorption battery 10, the pair of electrodes 11 and 12 includes the first electrode 11 and the second electrode 12.

From the above, the carbon dioxide adsorption battery 10 can adsorb and desorb carbon dioxide from both the first electrode 11 and the second electrode 12. Therefore, the carbon dioxide adsorption battery 10 can efficiently perform charge while adsorbing carbon dioxide from gas containing carbon dioxide and desorbing the carbon dioxide at the time of discharge. Further, by adsorbing and desorbing carbon dioxide from both the first electrode 111 side and the second electrode 12 side, unevenness in usage frequency of each electrode is reduced, so that durability and life of the electrode can be extended. Further, since the carbon dioxide adsorption battery 10 performs adsorption and desorption of carbon dioxide of these by applying voltage, the adsorption and desorption can be performed regardless of a surrounding environment such as temperature and atmospheric pressure. The carbon dioxide adsorption battery 10 can adsorb and desorb carbon dioxide, for example, even at room temperature or under atmospheric pressure.

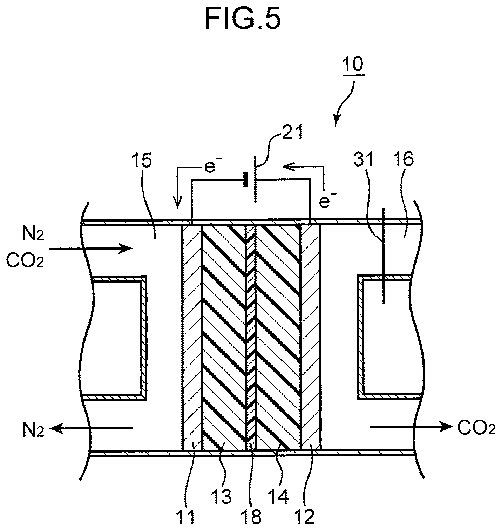

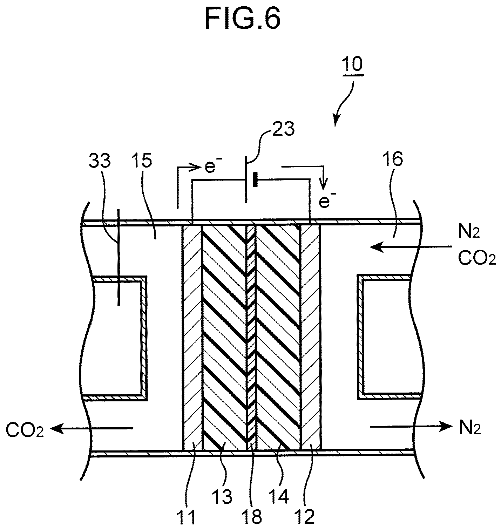

As described above, the carbon dioxide adsorption battery 10 can be charged while adsorbing carbon dioxide from gas containing carbon dioxide and can desorb carbon dioxide at the time of discharge by reversing an electrode and applying voltage as illustrated in FIGS. 5 and 6 without discharge. Note that FIG. 5 is a schematic cross-sectional view illustrating an example of a configuration at the time of charge before electrode reversal in the carbon dioxide adsorption battery according to the first embodiment of the present invention. FIG. 6 is a schematic cross-sectional view illustrating an example of a configuration at the time of charge after electrode reversal (electrode reversal from the time of charging illustrated in FIG. 5) in the carbon dioxide adsorption battery according to the first embodiment of the present invention.

In the carbon dioxide adsorption battery 10, as illustrated in FIG. 5, when voltage is applied between the pair of electrodes 11 and 12 by the application unit 21 in a manner that potential of the first electrode 11 becomes lower than potential of the second electrode 12, carbon dioxide is adsorbed from gas flowing through the first flow path 15 to the compound contained in the first electrolyte 13. Therefore, the carbon dioxide adsorption battery 10 can be charged while adsorbing carbon dioxide from gas containing carbon dioxide flowing through the first flow path 15. If this charge is first charge, that is, if carbon dioxide is not adsorbed to the compound contained in the second electrolyte 14 before this charge, charge is only performed while carbon dioxide is adsorbed from gas containing carbon dioxide.

After the above, in the carbon dioxide adsorption battery 10, as illustrated in FIG. 6, when voltage is applied between the pair of electrodes 11 and 12 by the application unit 23 in a manner that potential of the second electrode 12 becomes lower than potential of the first electrode 11, carbon dioxide adsorbed to the compound contained in the first electrolyte 13 is desorbed, and carbon dioxide is released to the first flow path 15. As carbon dioxide is released into the first flow path 15 as described above, carbon dioxide is adsorbed from gas flowing through the second flow path 16 to the compound contained in the first electrolyte 13. Therefore, the carbon dioxide adsorption battery 10 can be charged while releasing carbon dioxide into the first flow path 15 and adsorbing carbon dioxide from gas containing carbon dioxide flowing through the second flow path 16. Note that, at this time, since carbon dioxide is released into the first flow path 15, the valve 33 on the upstream side of the first flow path 15 is preferably closed in order to prevent backflow of carbon dioxide.

After the above, in the carbon dioxide adsorption battery 10, as illustrated in FIG. 5, when voltage is applied between the pair of electrodes 11 and 12 by the application unit 21 in a manner that potential of the first electrode 11 becomes lower than potential of the second electrode 12, carbon dioxide adsorbed to the compound contained in the second electrolyte 14 is desorbed, and carbon dioxide is released to the second flow path 16. As carbon dioxide is released into the second flow path 16 as described above, carbon dioxide is adsorbed from gas flowing through the first flow path 15 to the compound contained in the second electrolyte 14. Therefore, the carbon dioxide adsorption battery 10 can be charged while releasing carbon dioxide into the second flow path 16 and adsorbing carbon dioxide from gas containing carbon dioxide flowing through the first flow path 15. Note that, at this time, since carbon dioxide is released into the second flow path 16, the valve 31 on the upstream side of the second flow path 16 is preferably closed in order to prevent backflow of carbon dioxide. Further, the application unit 21 and the application unit 23 may be voltage application units capable of switching between high and low potentials of the pair of electrodes 11 and 12.

As described above, the carbon dioxide adsorption battery 10 can adsorb and desorb carbon dioxide from both the first electrode 11 and the second electrode 12 by reversing the electrode and applying voltage as illustrated in FIGS. 5 and 6 without discharging, and can continuously adsorb and desorb carbon dioxide at each of the first electrode 11 and the second electrode 12. Therefore, as illustrated in FIGS. 5 and 6, the carbon dioxide adsorption battery 10 can efficiently perform charge while adsorbing carbon dioxide from gas containing carbon dioxide and desorbing the carbon dioxide at the time of discharge by reversing the electrode and applying voltage, and specifically, can improve concentration efficiency of carbon dioxide per unit time.

As described above, the carbon dioxide adsorption battery 10 can continuously perform adsorption and desorption of carbon dioxide at each of the first electrode 11 and the second electrode 12 by reversing the electrode and applying voltage as illustrated in FIGS. 5 and 6 and can efficiently concentrate carbon dioxide. Therefore, the carbon dioxide adsorption battery 10 includes, as the application unit 21 and the application unit 23, a voltage application unit capable of switching between high and low potentials of the pair of electrodes 11 and 12, so that a carbon dioxide concentration device capable of efficiently concentrating carbon dioxide can be formed. That is, it is possible to obtain a carbon dioxide concentration device including the carbon dioxide adsorption battery 10, and the application units 21 and 23 that apply voltage between the pair of electrodes 11 and 12, in which the application units 21 and 23 are capable of switching between high and low potentials of the pair of electrodes 11 and 12.

### (Pair of electrodes)

Each electrode constituting the pair of electrodes 11 and 12 is not particularly limited as long as the electrode is permeable to gas. That is, each of the electrodes 11 and 12 only needs to be a conductive member that is permeable to gas such as carbon dioxide and allows current to flow through the electrolytes 13 and 14 sandwiched between the pair of electrodes 11 and 12. Further, each of the electrodes 11 and 12 is preferably a porous body having conductivity to such an extent that movement of an electron is not hindered, capable of accumulating charges, excellent in air permeability, and having a wide gas contact area. Specifically, examples of the electrodes 11 and 12 include an electrode made of a porous conductive material and an electrode made of a porous body containing a conductive material. Examples of the porous conductive material include a porous metal layer, a porous body containing a metal fiber, a porous body containing a conductive fiber, a porous body containing carbon as a main component, and a porous body made of carbon. Examples of the carbon include activated carbon such as graphite, a carbon nanotube, and an activated carbon fiber, and carbonaceous materials such as a carbon fiber. A porous body containing the carbon is preferably the carbonaceous material formed into a cloth shape or a felt shape. Examples of the porous body containing a metal fiber include a woven fabric containing a metal fiber, a knitted fabric containing a metal fiber, and a braided fabric containing a metal fiber. Examples of the porous body containing a conductive fiber include a woven fabric containing a conductive fiber, a knitted fabrics containing a conductive fiber, and a braided fabric containing a conductive fiber. Examples of the conductive fiber include a fiber coated with metal. Further, examples of the coating method include plating. That is, examples of the conductive fiber include a plated fiber. As the porous conductive materials, these may be used alone, or two or more types of these may be used in combination. That is, each of the electrodes 11 and 12 may be an electrode made of a single conductive material among these porous conductive materials, or an electrode made of a combination of two or more types of conductive materials. Further, examples of the conductive material contained in a porous body include a metal fiber, a conductive fiber, a metal particle, conductive ceramic, activated carbon such as graphite, a carbon nanotube, and an activated carbon fiber, and a carbonaceous material such as a carbon fiber. Examples of the metal fiber and the metal particle include those containing copper, silver, and the like. The porous body containing the metal fiber may be a porous conductive material. Further, the conductive material is preferably graphite, a carbon nanotube, an activated carbon, or a carbon fiber, and more preferably activated carbon such as an activated carbon fiber from the viewpoint of corrosion resistance and specific surface area. Further, the conductive material may be used alone or two or more types of the conductive materials may be used in combination. Further, as each of the electrodes 11 and 12, a carbon based electrode using activated carbon or a carbon fiber, an electrode using a needle shaped conductive material and having high porosity, or the like is preferable. Further, specifically, examples of the electrodes 11 and 12 include a carbon sheet, carbon cloth, and carbon paper. Further, each of the pair of electrodes 11 and 12 is preferably an electrode made of a conductive material containing at least one selected from a group consisting of a metal fiber, a conductive fiber, a metal particle, conductive ceramic, graphite, a carbon nanotube, activated carbon, and a carbon fiber among the electrodes. Such an electrode is considered to be suitably permeable to gas, and to be able to suitably apply voltage between the pair of electrodes 11 and 12 by the application units 21 and 23. For this reason, by using the electrodes 11 and 12 as the pair of electrodes 11 and 12, it is possible to obtain a carbon dioxide adsorption battery capable of more suitably adsorbing carbon dioxide from gas containing carbon dioxide at the time of charge and more suitably releasing carbon dioxide at the time of discharge.

The porous metal layer is a metal layer in which a large number of holes are formed. Further, in the porous metal layer, the holes are preferably formed over the entire metal layer from the viewpoint of excellent air permeability. Further, the method of obtaining the porous metal layer is not particularly limited as long as it is a method (method for porosification) of performing processing of forming a large number of holes on a metal layer in which the holes are not formed (metal layer before the holes are formed). Examples of the method include a physical method such as cutting, polishing, and sandblasting, and a chemical method such as electrolytic etching and electroless etching using an etching solution such as an acid or a base. Further, as the method for porosification, each of the above methods may be performed alone, or two or more types of the above methods may be performed in combination. Further, from the viewpoint of increasing a surface area, the method for porosification is preferably a chemical method in order to make holes (pores) to be formed more densely (to form denser holes). Further, a material of the metal layer is not particularly limited, and examples of the material include aluminum, copper, silver, gold, iron, titanium, molybdenum, tungsten, nickel, and an alloy of these. Among them, a material of the metal layer is preferably aluminum from the viewpoint of price and workability. Further, a metal layer before the hole is formed is preferably what is called aluminum foil.

A BET specific surface area of each of the electrodes 11 and 12 is not particularly limited, but is, for example, preferably 1 m²/g or more, more preferably 100 m²/g or more, and still more preferably 500 m²/g or more. The BET specific surface area of each of the electrodes 11 and 12 is preferably larger from the viewpoint of gas permeability (air permeability), but is preferably 3000 m²/g or less, more preferably 2500 m²/g or less, and still more preferably 2000 m²/g or less from the viewpoint of strength and the like of each of the electrodes 11 and 12. Therefore, a BET specific surface area of each of the electrodes 11 and 12 is preferably 1 to 3000 m²/g, more preferably 100 to 2500 m²/g, and still more preferably 500 to 2000 m²/g. When a BET specific surface area of each of the electrodes 11 and 12 is too small, permeability (air permeability) of gas decreases, and permeation of carbon dioxide tends to be inhibited. Further, when a BET specific surface area of each of the electrodes 11 and 12 is too large, strength and the like of the electrode tend to be insufficient. From these, when a BET specific surface area of each of the electrodes 11 and 12 is within the above range, adsorption and release of carbon dioxide can be realized for a long period of time, and the carbon dioxide battery can be used for a long period of time. Note that the BET specific surface area is a specific surface area measured by a BET method, and can be measured by a publicly known method. Examples of the method of measuring the BET specific surface area include a method of performing nitrogen adsorption isotherm measurement and calculating a BET specific surface area from an obtained adsorption isotherm.

Each of the electrodes 11 and 12 may further include a current collector. That is, each of the electrodes 11 and 12 may be made of the porous body, or may include the porous body and the current collector. The current collector is not particularly limited as long as the current collector does not inhibit permeation of gas. As the current collector, for example, a current collector made of a material having conductivity and opened within a range not hindering permeation of gas can be used. More specifically, the current collector may be made of metal such as mesh metal, punching metal, or expanded metal, or may be a woven fabric or a nonwoven fabric made of natural fibers or synthetic fibers plated to have conductivity. As metal that can be used as the current collector, for example, stainless steel, iron, nickel, titanium, copper, and the like can be used.

In an electrode including the porous body and the current collector, the porous body and the current collector are preferably integrated, and an integration method is not particularly limited. In the porous body and the current collector that are integrated, conductivity may be secured by partially integrating the porous body and the current collector by using a method of ultrasonic welding, plasma welding, and the like as an integration method. Further, the porous body and the current collector that are integrated may have conductivity by interposing a conductive material such as a conductive adhesive between the porous body and the current collector. The conductive material is not particularly limited, and for example, a material in which metal fine particles such as silver, gold, and nickel are dispersed, a carbon material based conductive material, a conductive polymer, and the like can be used.

As described above, each of the electrodes 11 and 12 is a conductive member capable of causing current to flow through the electrolyte 13 or 14 sandwiched between the pair of electrodes 11 and 12, and a surface resistance value of the electrodes is preferably as small as possible, and is, for example, preferably 1 kΩ/sq or less, and more preferably 200 Ω/sq or less. Further, a surface resistance value of each of the electrodes 11 and 12 is preferably as small as possible, but is actually limited to 1 Ω/sq, and is often about 10 Ω/sq or more. Therefore, a surface resistance value of each of the electrodes 11 and 12 is preferably 1 Ω/sq to 1 kΩ/sq, and more preferably 10 to 200 Ω/sq. With an electrode having such a surface resistance value, current can be suitably caused to flow through the electrolytes 13 and 14, and carbon dioxide can be suitably separated.

Thickness of each of the electrodes 11 and 12 is not particularly limited, but is preferably thickness by which carbon dioxide can be adsorbed and liquid leakage of the electrolytic solution can be suitably prevented. Thickness of each of the electrodes 11 and 12 is, for example, preferably 20 µm or more and 10 mm or less, and more preferably 50 µm or more and 5 mm. When the electrodes 11 and 12 are too thin, strength and the like of the electrodes tend to be insufficient. Further, when the electrodes 11 and 12 are too thick, permeability of gas (air permeability) is reduced, and permeation of carbon dioxide tends to be inhibited. From these, when thickness of the electrodes is within the above range, separation of carbon dioxide can be realized over a long period of time.

The pair of electrodes (the first electrode 11 and the second electrode 12) are preferably arranged so as to be plane symmetrical with respect to the separator 18 (plane symmetrical to each other with the separator 18 interposed between them). With this arrangement, it is possible to more reliably adsorb and desorb carbon dioxide from any electrode side of the pair of electrodes by reversing voltage applied between the pair of electrodes 11 and 12. Further, even in a case where voltage applied between the pair of electrodes 11 and 12 is reversed, similar performance can be maintained before and after the reversal. Therefore, it is possible to more reliably and efficiently perform charge while adsorbing carbon dioxide from gas containing carbon dioxide and desorption of the carbon dioxide at the time of discharge as described above.

Each of the electrodes 11 and 12 is preferably selected such that a performance difference (a performance difference between before and after reversal) when voltage applied between the pair of electrodes 11 and 12 is reversed becomes small. Specifically, the electrode 11 and the electrode 12 are preferably made of the same material. Further, for example, a ratio of thickness of the electrode 11 to thickness of the electrode 12 (thickness of the electrode 11/thickness of the electrode 12) is preferably 0.9 to 1.1, more preferably 0.95 to 1.05, and still more preferably 1 (that is, the same thickness) from the viewpoint of being able to reduce a performance difference when voltage applied between the pair of electrodes is reversed. Further, a ratio of a BET specific surface area of the electrode 11 to a BET specific surface area of the electrode 12 (BET specific surface area of the electrode 11/BET specific surface area of the electrode 12) is preferably 0.9 to 1.1, more preferably 0.95 to 1.05, and still more preferably 1 (same BET specific surface area). As described above, the electrodes 11 and 12 preferably have the same material, characteristics, and the like, and the electrodes are preferably the same electrodes. When the electrode 11 and the electrode 12 are of the same quality, a difference in performance when voltage applied between a pair of electrodes is reversed is reduced.

### (Electrolyte)

Electrolytes constituting the first electrolyte 13 and the second electrolyte 14 are not particularly limited as long as they contain an electrolytic solution capable of dissolving carbon dioxide and a compound capable of absorbing and desorbing carbon dioxide by an electrochemical reaction. The electrolytes 13 and 14 may be the same electrolyte. Specifically, since the electrolytes 13 and 14 are fractionated into the first electrolyte 13 and the second electrolyte 14 by the separator 18, the electrolytes 13 and 14 are the same electrolyte. Further, as described above, each of the electrolytes 13 and 14 is a carbon dioxide separator that contributes to separation of carbon dioxide by adsorption and release of carbon dioxide.

The compound is not particularly limited as long as it is a compound capable of adsorbing and desorbing carbon dioxide by an electrochemical reaction. Examples of the compound include a compound in which carbon dioxide is adsorbed by electrolytic reduction of the compound and carbon dioxide is desorbed by electrolytic oxidation of the compound. Further, examples of the compound include compounds below in the carbon dioxide adsorption battery 10. Specifically, examples include a compound in which carbon dioxide is adsorbed when potential is relatively low between the pair of electrodes 11 and 12 and an electron is received, and carbon dioxide is desorbed when potential is relatively high and an electron is supplied. More specifically, examples of the compound include a redox compound. Further, examples of the redox compound include a redox compound having an N-oxy radical group in a molecule. The redox compound is preferably, for example, a compound in which two quaternary carbons are bonded to the N-oxy radical group. It is considered that a compound in which two quaternary carbons are bonded to the N-oxy radical group can prevent the N-oxy radical group from decomposing by drawing a hydrogen radical from carbon adjacent to the N-oxy radical group. Therefore, it is considered that the redox compound can more suitably perform adsorption and desorption of carbon dioxide, and the carbon dioxide adsorption battery can more adsorb carbon dioxide from gas containing carbon dioxide, and can more maintain a charged state.

The redox compound is not particularly limited as long as it is a redox compound having an N-oxy radical group in a molecule. The redox compound is preferably nonvolatile. The redox compound is electrolytically reduced to adsorb carbon dioxide as shown in Formula (4) and Formula (5) below, and electrolytically oxidized to desorb adsorbed carbon dioxide as shown in Formula (7) and Formula (8) below. In this redox compound, for example, by applying voltage between the pair of electrodes 11 and 12 by the application unit 21, an N-oxy radical group is reduced to an N-oxy anion group, and carbon dioxide is bonded. Further, when the carbon dioxide adsorption battery 10 is discharged, carbon dioxide is desorbed to form an N-oxy anion group, and this N-oxy anion group is oxidized to return to an N-oxy radical. As described above, the redox compound is a compound in which an N-oxy radical group is changed by oxidation reduction.

In the redox compound contained in each of the electrolytes 13 and 14, an N-oxy radical group is reduced to an N-oxy anion group as shown in Formula (4) below in an electrolyte on the side close to an electrode having lower potential between the pair of electrodes 11 and 12. Then, as shown in Formula (5) below, since carbon dioxide dissolved in the electrolytic solution is bonded to the N-oxy anion group, the dissolution of carbon dioxide in the electrolytic solution is promoted. For this reason, in the carbon dioxide adsorption battery 10, at the time of charge, carbon dioxide is taken in from the electrode side having lower potential between the pair of electrodes 11 and 12, and carbon dioxide is adsorbed to the electrolyte on the electrode side. That is, carbon dioxide is adsorbed to the redox compound by electrolytic reduction as shown in Formula (4) and Formula (5) below.

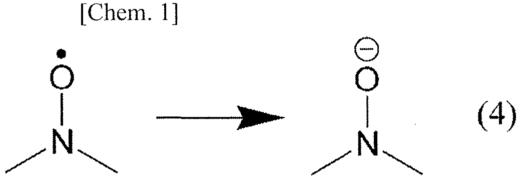

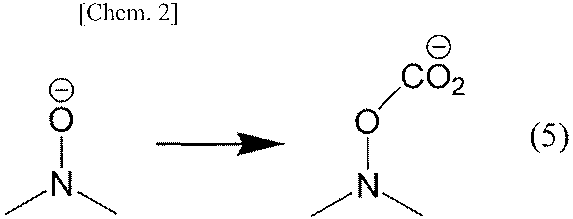

On the other hand, in the redox compound contained in each of the electrolytes 13 and 14, an N-oxy radical group is oxidized to become an N-oxy cation group as shown in Formula (6) below in an electrolyte on the side close to an electrode having higher potential between the pair of electrodes 11 and 12.

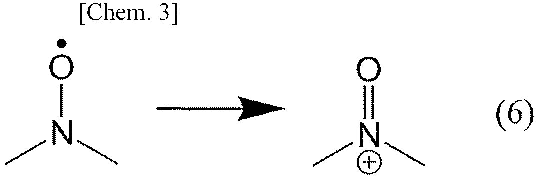

The separator 18 is permeable to the electrolytic solution, but suppresses permeation of the redox compound. That is, the redox compound is less likely to permeate through the separator 18 than the electrolytic solution. Therefore, a redox compound in which an N-oxy radical group is reduced to become the N-oxy anion group and a redox compound to which carbon dioxide is bonded hardly permeate through the separator 18. Therefore, even after charge is stopped, unless discharge is performed, these redox compounds are less likely to permeate through the separator 18, so that the carbon dioxide adsorption battery 10 can maintain a charged state.

Next, when the charged carbon dioxide adsorption battery 10 is discharged, as shown in Formula (7) below, an N-oxy cation group returns to an N-oxy radical group in an electrolyte on the side closer to an electrode having higher potential between the pair of electrodes 11 and 12 at the time of the charging. At the time of charge, in an electrolyte on the side close to an electrode having lower potential between the pair of electrodes 11 and 12, carbon dioxide is desorbed from the redox compound as shown in Formula (8) below, and an N-oxy anion group returns to an N-oxy radical group as shown in Formula (9) below. Therefore, the carbon dioxide adsorption battery 10 can release carbon dioxide from the electrode side on the side where carbon dioxide is taken in at the time of discharge.

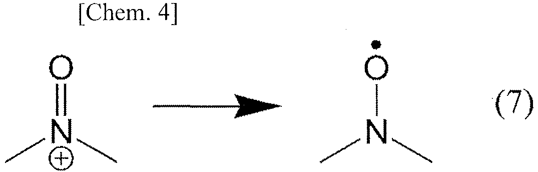

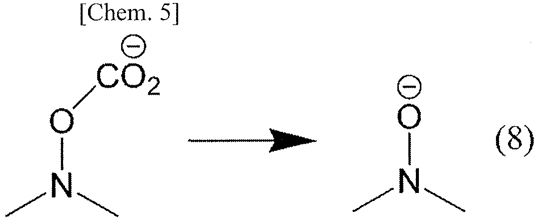

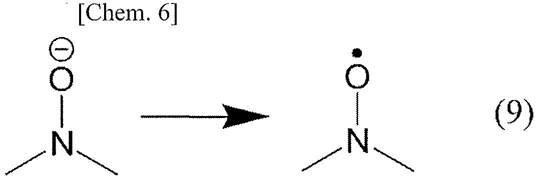

As described above, it is considered that the carbon dioxide adsorption battery 10 can adsorb carbon dioxide at the time of charge and release carbon dioxide at the time of discharge by containing the redox compound in the electrolytes 13 and 14, and can perform charging while easily adsorbing carbon dioxide from gas containing carbon dioxide. Further, it is considered that the carbon dioxide adsorption battery 10 can concentrate carbon dioxide by adsorption and release of carbon dioxide as described above. Further, the carbon dioxide adsorption battery 10 uses not the quinone compound but a redox compound having an N-oxy radical group having higher durability than the quinone compound in a molecule, and thus has extremely low reactivity such as hydrogen abstraction from another substance in a case of being ionized like quinone, and thus has excellent durability. Further, in a case where a quinone compound is contained in an electrolyte on one electrode side of the pair of electrodes, it is difficult to contain and use a quinone compound in an electrolyte on the other electrode side. On the other hand, in a case of a redox compound having an N-oxy radical group in a molecule, since the N-oxy radical group becomes an N-oxy cation group by oxidation, the same compound can be used in both of the pair of electrodes. For this reason, it is not necessary to prepare several types of complex compounds as the compound to be contained in the electrolytes 13 and 14, and there is also an advantage that the number of members can be reduced.

The electrolytic solution is not particularly limited as long as it is an electrolytic solution capable of dissolving carbon dioxide, and may be an electrolytic solution containing an electrolyte and a solvent, or an electrolytic solution containing ionic liquid. Note that the electrolytic solution capable of dissolving carbon dioxide only needs to be an electrolytic solution other than an electrolytic solution in which carbon dioxide is not dissolved, that is, an electrolytic solution in which carbon dioxide is dissolved even slightly, and high solubility is not required. This is considered to be due to a reason below. As described above, in the carbon dioxide adsorption battery according to the present embodiment, it is considered that adsorption and release of carbon dioxide proceed by a mechanism in which carbon dioxide is taken into the first electrolyte 13 on the first electrode 11 side or the second electrolyte 14 on the second electrode 12 side at the time of charge and carbon dioxide is released, at the time of discharge, from the electrolytes 13 and 14 on the side into which carbon dioxide is taken in at the time of charge by bonding and desorption of carbon dioxide to and from the compound. For this reason, it is considered that adsorption and release of carbon dioxide proceed if carbon dioxide is dissolved even slightly in an electrolytic solution contained in the electrolytes 13 and 14.

As described above, the electrolytic solution is not particularly limited as long as it is an electrolytic solution capable of dissolving carbon dioxide, but is preferably nonvolatile. As described above, the electrolytic solution may be an electrolytic solution containing an electrolyte and a solvent, or may be an electrolytic solution containing ionic liquid, but is preferably an electrolytic solution that is nonvolatile and can be used as an electrolytic solution. Specifically, the electrolytic solution is preferably ionic liquid.

The solvent is preferably an electrochemically stable compound having a wide potential window, and may be an aqueous solvent or an organic solvent. Examples of the solvent include water, a carbonate compound, an ester compound, an ether compound, a heterocyclic compound, a nitrile compound, and a polar aprotic compound. Examples of the carbonate compound include dimethyl carbonate, diethyl carbonate, methyl ethyl carbonate, ethylene carbonate, and propylene carbonate. Examples of the ester compound include methyl acetate, methyl propionate, and γ-butyrolactone. Examples of the ether compound include diethyl ether, 1,2-dimethoxyethane, 1,3-dioxosilane, tetrahydrofuran, and 2-methyl-tetrahydrofuran. Examples of the heterocyclic compound include 3-methyl-2-oxazolidinone and 2-methylpyrrolidone. Examples of the nitrile compound include acetonitrile, methoxyacetonitrile, propionitrile, 3-methoxypropionitrile, and valeronitrile. Examples of the polar aprotic compound include sulfolane, dimethyl sulfoxide, and dimethylformamide. As the solvent, each of the exemplified solvents may be used alone, or two or more types of the solvents may be used in combination. Further, as the solvent, among the solvents exemplified above, carbonate compounds such as ethylene carbonate and propylene carbonate, ester compounds such as γ-butyrolactone, heterocyclic compounds such as 3-methyl-2-oxazolidinone and 2-methylpyrrolidone, and nitrile compounds such as acetonitrile, methoxyacetonitrile, propionitrile, 3-methoxypropionitrile, and valeronitrile are preferable. Further, in a case where two or more types are used in combination as the solvent, it is preferable to use water from the viewpoint of dissolution of carbon dioxide.

The electrolyte is not particularly limited, and examples of the electrolyte include quaternary ammonium salt, inorganic salt, and a hydroxide. Examples of the quaternary ammonium salt include tetramethylammonium tetrafluoroborate, tetra-n-ethylammonium tetrafluoroborate, tetra-n-propylammonium tetrafluoroborate, tetra-n-butylammonium tetrafluoroborate, n-hexadecyltrimethylammonium tetrafluoroborate, tetra-n-hexadecylammonium tetrafluoroborate, tetra-n-octylammonium tetrafluoroborate, tetra-n-ethylammonium perchlorate, tetra-n-butylammonium perchlorate, and tetraoctadecylammonium perchlorate. Examples of the inorganic salt include lithium perchlorate, sodium perchlorate, potassium perchlorate, sodium acetate, potassium acetate, sodium nitrate, and potassium nitrate. Examples of the hydroxide include sodium hydroxide and potassium hydroxide. Among the electrolytes exemplified above, the electrolyte is preferably tetramethylammonium tetrafluoroborate, tetra-n-ethylammonium tetrafluoroborate, tetra-n-propylammonium tetrafluoroborate, tetra-n-butylammonium tetrafluoroborate, n-hexadecyltrimethylammonium tetrafluoroborate, tetra-n-hexadecylammonium tetrafluoroborate, tetra-n-octylammonium tetrafluoroborate, tetra-n-ethylammonium perchlorate, tetra-n-butylammonium perchlorate, tetraoctadecylammonium perchlorate, lithium perchlorate, sodium perchlorate, sodium acetate, or potassium acetate. Further, among them, as the electrolyte, tetra-n-ethylammonium tetrafluoroborate, tetra-n-propylammonium tetrafluoroborate, tetra-n-butylammonium tetrafluoroborate, lithium perchlorate, and sodium perchlorate are more preferable, and tetra-n-butylammonium tetrafluoroborate and lithium perchlorate are still more preferable. Further, the electrolyte may stabilize a carbonate ion or a bicarbonate ion as its supporting salt and may have pH buffering ability. Specifically, examples of the electrolyte in this case include sodium hydrogen carbonate, sodium carbonate, acetic acid, and sodium acetate. As the electrolyte, the above-exemplified electrolytes may be used alone, or two or more types of the electrolytes may be used in combination.

As described above, the electrolytic solution may be an electrolytic solution containing ionic liquid (ionic liquid). When ionic liquid is used as the electrolytic solution, even if an electrolyte and a solvent as described above are not contained, the ionic liquid may have functions of both of them. Further, the electrolytic solution only needs to contain ionic liquid, and may be liquid containing an electrolyte in ionic liquid, may be liquid containing a solvent in ionic liquid, may be liquid containing an electrolyte and a solvent in ionic liquid, or may be ionic liquid. Further, it is preferable to use ionic liquid as the electrolytic solution because ionic liquid have low volatility and high flame resistance.

The ionic liquid is not particularly limited as long as it is publicly known ionic liquid, and examples of the ionic liquid include imidazolium based ionic liquid, pyridine based ionic liquid, an alicyclic amine based ionic liquid, and an azonium amine based ionic liquid. Examples of the ionic liquid include 1-methyl-3-octylimidazolium tetrafluoroborate, 1-ethyl-3-methylimidazolium tetrafluoroborate, 1-butyl-3-methylimidazolium chloride, 1-butyl-3-methylimidazolium tetrafluoroborate, 1-decyl-3-methylimidazolium tetrafluoroborate, 1,3-dimethoxyimidazolium tetrafluoroborate, 1,3-diethoxyimidazolium tetrafluoroborate, 1-methyl-3-octylimidazolium hexafluorophosphate, 1-ethyl-3-methylimidazolium hexafluorophosphate, 1-butyl-3-methylimidazolium hexafluorophosphate, 1-decyl-3-methylimidazolium hexafluorophosphate, 1,3-dimethoxyimidazolium hexafluorophosphate, and 1,3-diethoxyimidazolium hexafluorophosphate. Further, among the ionic liquids exemplified above, the ionic liquid is preferably 1-methyl-3-octylimidazolium tetrafluoroborate, 1-ethyl-3-methylimidazolium tetrafluoroborate, 1-butyl-3-methylimidazolium tetrafluoroborate, 1-butyl-3-methylimidazolium bis(trifluoromethylsulfonylimide), 1,3-dimethoxyimidazolium tetrafluoroborate, 1-methyl-3-octylimidazolium hexafluorophosphate, and 1-ethyl-3-methylimidazolium hexafluorophosphate. Further, as the ionic liquid, 1-methyl-3-octylimidazolium tetrafluoroborate, 1,3-dimethoxyimidazolium tetrafluoroborate, 1-butyl-3-methylimidazolium bis(trifluoromethylsulfonylimide), 1-butyl-3-methylimidazolium chloride, and 1-methyl-3-octylimidazolium hexafluorophosphate are more preferable, and 1-butyl-3-methylimidazolium bis(trifluoromethylsulfonylimide), 1-butyl-3-methylimidazolium chloride, and 1-methyl-3-octylimidazolium tetrafluoroborate are still more preferable.

In each of the electrolytes 13 and 14, the electrolytic solution may be gelled. Specifically, a gelling agent for gelling may be added to the electrolytic solution, or a gelled electrolyte or a polymer electrolyte may be used. Examples of the gelling agent include a polymer, a gelling agent using a technique such as a polymer crosslinking reaction, a polymerizable multifunctional monomer, and an oil gelling agent. The gelled electrolyte and the polymer electrolyte are not particularly limited as long as they can be used as a gelled electrolyte or a polymer electrolyte, and examples of them include vinylidene fluoride based polymers such as polyvinylidene fluoride, acrylic acid based polymers such as polyacrylic acid, acrylonitrile based polymers such as polyacrylonitrile, polyether based polymers such as polyethylene oxide, and compounds having an amide structure in the structure.

Specifically, examples of the redox compound include a compound represented by Formula (1) below, a compound represented by Formula (2) below, a compound represented by Formula (3) below, and a compound having a group in which one hydrogen atom is removed from the compound represented by any of Formulas (1) to (3) below. The compound having a group in which one hydrogen atom is removed from the compound represented by any of Formulas (1) to (3) below only needs to be a compound having the group, may be a compound bonded to another low molecular weight compound, or may be a high molecular weight compound.

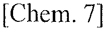

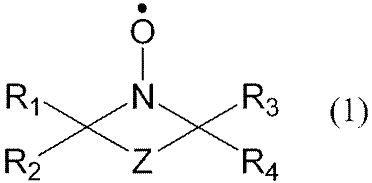

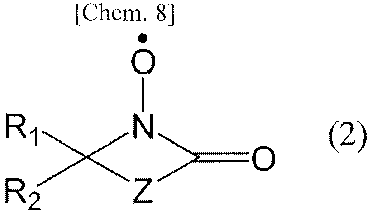

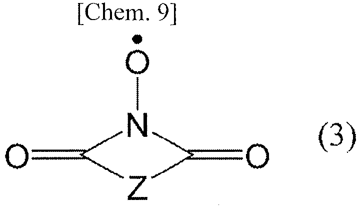

In Formulas (1) to (3), Z represents -CR₅R₆CR₇R₈-,-CR₉R₁₀CR₁₁R₁₂CR₁₃R₁₄-,-(CR₁₅R₁₆)O-, -(CR₁₇R₁₈)NR₂₇-, -(CR₁₉R₂₀)O(CR₂₁R₂₂)-, or -(CR₂₃R₂₄)NR₂₈(CR₂₅R₂₆)-. Each of R₁ to R₄ independently represents a substituent, and R₁ and R₂ may be bonded to each other to form a ring, or R₃ and R₄ may be bonded to each other to form a ring. Each of R₅ to R₂₈ independently represents a hydrogen atom or a substituent.

At least one of R₁ to R₄ is preferably a substituent, two or more of R₁ to R₄ are more preferably substituents, and all four of R₁ to R₄ are still more preferably substituents. That is, the compound represented by Formula (1) is preferably a compound in which two quaternary carbons are bonded to the N-oxy radical group. Further, the redox compound is preferably a compound in which two quaternary carbons are bonded to the N-oxy radical group, or a compound having a group in which one hydrogen atom is removed from the compound. In such a compound, oxidation reduction by the N-oxy radical group is likely to occur, and it is considered that adsorption and release of carbon dioxide by the redox compound can be more suitably performed. For this reason, by including such a compound in an electrolyte layer, it is possible to obtain a carbon dioxide adsorption battery capable of more suitably adsorbing carbon dioxide from gas containing carbon dioxide at the time of charge and more suitably releasing carbon dioxide at the time of discharge.

Z in the compounds represented by Formulas (1) to (3) is preferably -CR₅R₆CR₇R₈-,-CR₉R₁₀CR₁₁R₁₂CR₁₃R₁₄-, -(CR₁₉R₂₀)O(CR₂₁R₂₂)-, and -(CR₂₃R₂₄)NR₂₈(CR₂₅R₂₆)-.

Examples of a substituent in R₁ to R₂₈ include a hydrocarbyl group having 1 to 30 carbon atoms, a hydrocarbyloxy group having 1 to 10 carbon atoms, a hydroxy group (hydroxyl group), an amino group which may be substituted (unsubstituted or substituted amino group), a carboxyl group, a thiol group, and a silyl group which may be substituted (unsubstituted or substituted silyl group). Further, among the above substituents in R₁ to R₂₆, a hydrocarbyl group having 1 to 30 carbon atoms, a hydroxy group, and an unsubstituted or substituted amino group are preferable. Further, the above substituent in R₂₇ and R₂₈ is preferably a hydrocarbyl group having 1 to 30 carbon atoms.

Note that "may be substituted" here includes both a case where hydrogen atoms constituting a compound or group described immediately after that are unsubstituted and a case where some or all of the hydrogen atoms are substituted with a substituent.

The hydrocarbyl group is not particularly limited, and may be linear, branched, or cyclic. Examples of the hydrocarbyl group include a methyl group, an ethyl group, a 1-propyl group, a 2-propyl group, a 1-butyl group, a 2-butyl group, an isobutyl group, a tert-butyl group, a pentyl group, a hexyl group, an octyl group, a decyl group, a dodecyl group, a 2-ethylhexyl group, a 3,7-dimethyloctyl group, a cyclopropyl group, a cyclopentyl group, a cyclohexyl group, a 1-adamantyl group, a 2-adamantyl group, a norbornyl group, an ammonium ethyl group, a benzyl group, an α,α-dimethylbenzyl group, a 1-phenethyl group, a 2-phenethyl group, a vinyl group, a propenyl group, a butenyl group, an oleyl group, an eicosapentaenyl group, a docosahexaenyl group, a 2,2-diphenylvinyl group, a 1,2,2-triphenylvinyl group, a 2-phenyl-2-propenyl group, a phenyl group, a 2-tolyl group, a 4-tolyl group, a 4-trifluoromethylphenyl group, a 4-methoxyphenyl group, a 4-cyanophenyl group, a 2-biphenylyl group, a 3-biphenylyl group, a 4-biphenylyl group, a terphenylyl group, a 3,5-diphenylphenyl group, a 3,4-diphenylphenyl group, a pentaphenylphenyl group, a 4-(2,2-diphenylvinyl)phenyl group, a 4-(1,2,2-triphenylvinyl)phenyl group, a fluorenyl group, a 1-naphthyl group, a 2-naphthyl group, a 9-anthryl group, a 2-anthryl group, a 9-phenanthryl group, a 1-pyrenyl group, a chrysenyl group, a naphthacenyl group, and a coronyl group. Among these, the hydrocarbyl group is preferably a methyl group, an ethyl group, a 1-propyl group, a 2-propyl group, a 1-butyl group, a 2-butyl group, a tert-butyl group, a pentyl group, a hexyl group, an octyl group, a decyl group, a dodecyl group, a 2-ethylhexyl group, a 3,7-dimethyloctyl group, a benzyl group, an α,α-dimethylbenzyl group, a 1-phenethyl group, a 2-phenethyl group, a vinyl group, a propenyl group, a butenyl group, an oleyl group, an eicosapentaenyl group, a docosahexaenyl group, a 2,2-diphenylvinyl group, a 1,2,2-triphenylvinyl group, a 2-phenyl-2-propenyl group, a phenyl group, a 2-tolyl group, a 4-tolyl group, a 4-trifluoromethylphenyl group, a 4-methoxyphenyl group, a 4-cyanophenyl group, a 2-biphenylyl group, a 3-biphenylyl group, a 4-biphenylyl group, a terphenylyl group, a 3,5-diphenylphenyl group, a 3,4-diphenylphenyl group, a pentaphenylphenyl group, a 4-(2,2-diphenylvinyl)phenyl group, a 4-(1,2,2-triphenylvinyl)phenyl group, a fluorenyl group, a 1-naphthyl group, a 2-naphthyl group, a 9-anthryl group, a 2-anthryl group, and a 9-phenanthryl group. Furthermore, among these, the hydrocarbyl group is more preferably a methyl group, an ethyl group, a 1-propyl group, a 2-propyl group, a 1-butyl group, a 2-butyl group, an isobutyl group, a tert-butyl group, a pentyl group, a hexyl group, an octyl group, a 2-ethylhexyl group, a 3,7-dimethyloctyl group, a benzyl group, and a phenyl group, and still more preferably a methyl group, an ethyl group, a 1-propyl group, a 2-propyl group, a 1-butyl group, a 2-butyl group, an isobutyl group, a tert-butyl group, a pentyl group, and a hexyl group.

The hydrocarbyloxy group is not particularly limited, and may be linear, branched, or cyclic. Examples of the hydrocarbyloxy group include a methoxy group, an ethoxy group, a 1-propyloxy group, a 2-propyloxy group, a 1-butoxy group, a 2-butoxy group, an isobutoxy group, a tert-butoxy group, a pentyloxy group, a hexyloxy group, an octyloxy group, a decyloxy group, a dodecyloxy group, a 2-ethylhexyloxy group, a 3,7-dimethyloctyloxy group, a cyclopropanoxy group, a cyclopentyloxy group, a cyclohexyloxy group, a 1-adamantyloxy group, a 2-adamantyloxy group, a norbornyloxy group, an ammonium ethoxy group, a trifluoromethoxy group, a benzyloxy group, an α,α-dimethylbenzyloxy group, a 2-phenethyloxy group, a 1-phenethyloxy group, a phenoxy group, an alkoxyphenoxy group, an alkoxyphenoxy group, an alkylphenoxy group, a 1-naphthyloxy group, a 2-naphthyloxy group, and a pentafluorophenyloxy group. Among these, the hydrocarbyloxy group is preferably a methoxy group, an ethoxy group, a 1-propyloxy group, a 2-propyloxy group, a 1-butoxy group, a 2-butoxy group, a tert-butoxy group, a pentyloxy group, a hexyloxy group, an octyloxy group, a decyloxy group, a dodecyloxy group, a 2-ethylhexyloxy group, and a 3,7-dimethyloctyloxy group. Furthermore, among these, the hydrocarbyloxy group is more preferably a methoxy group, an ethoxy group, a 1-propyloxy group, a 2-propyloxy group, a 1-butoxy group, a 2-butoxy group, an isobutoxy group, a tert-butoxy group, a pentyloxy group, and a hexyloxy group.

The amino group is not particularly limited, and may be linear, branched, or cyclic. Examples of the amino group include a methylamino group, an ethylamino group, a 1-propylamino group, a 2-propylamino group, a 1-butylamino group, a 2-butylamino group, an isobutylamino group, a tert-butylamino group, a pentylamino group, a hexylamino group, an octylamino group, a decylamino group, a dodecylamino group, a 2-ethylhexylamino group, a 3,7-dimethyloctylamino group, a cyclopropylamino group, a cyclopentylamino group, a cyclohexylamino group, a 1-adamantylamino group, a 2-adamantylamino group, a norbornylamino group, an ammonium ethylamino group, a trifluoromethylamino group, a benzylamino group, an α,α-dimethylbenzylamino group, a 2-phenethylamino group, a 1-phenethylamino group, a phenylamino group, an alkoxyphenylamino group, an alkylphenylamino group, a 1-naphthylamino group, 2-naphthylamino group, and pentafluorophenylamino group. Among these, the amino group is preferably a methylamino group, an ethylamino group, a 1-propylamino group, a 2-propylamino group, a 1-butylamino group, a 2-butylamino group, a tert-butylamino group, a pentylamino group, a hexylamino group, an octylamino group, a decylamino group, a dodecylamino group, a 2-ethylhexylamino group, and a 3,7-dimethyloctylamino group. Furthermore, among these, the amino group is more preferably a methylamino group, an ethylamino group, a 1-propylamino group, a 2-propylamino group, a 1-butylamino group, a 2-butylamino group, an isobutylamino group, a tert-butylamino group, a pentylamino group, and a hexylamino group.

The silyl group is not particularly limited. Examples of the silyl group include a dimethylsilyl group, a diethylsilyl group, a diphenylsilyl group, a trimethylsilyl group, a triethylsilyl group, a t-butyldimethylsilyl group, a t-butyldiphenylsilyl group, and a tristrimethylsilyl group.

As described above, the compound represented by Formula (1) below is preferably a compound in which two quaternary carbons are bonded to the N-oxy radical group. As described above, it is considered that a group having large steric hindrance is bonded to a portion adjacent to the N-oxy radical group, so that stability of a radical is enhanced and radical coupling can be suppressed. For this reason, such a compound is included in an electrolyte layer, so that carbon dioxide can be more suitably adsorbed from gas containing carbon dioxide at the time of charge, and a carbon dioxide adsorption battery capable of releasing carbon dioxide at the time of discharge can be obtained.

Examples of the compound represented by Formula (1) below include 1,4-di(1-oxy-2,2,6,6-tetramethyl-1-piperidine-4-yloxy)xylene, 4-acetamide-2,2,6,6-tetramethylpiperidine 1-oxyl, N,N-di-tert-butylnitroxide radical, N,N-diphenylnitroxide radical, N,N-dinaphthylnitroxide radical, N,N-di-2-methylphenylnitroxide radical, N,N-di-3-methylphenylnitroxide radical, N,N-di-4-methylphenylnitroxide radical, N,N-di-2-ethylphenylnitroxide radical, N,N-di-2-propylphenylnitroxide radical, N,N-di-2-butylphenylnitroxide radical, N,N-di-2-pentylphenylnitroxide radical, N,N-di-2-hexylphenylnitroxide radical, N,N-di-2-isopropylphenylnitroxide radical, N,N-di-2-isobutylphenylnitroxide radical, N,N-di-2-sec-butylphenylnitroxide radical, N,N-di-2-tert-butylphenylnitroxide radical, N,N-di-4-tert-butylphenylnitroxide radical, N,N-di-(3,5-di-tert-butyl)phenylnitroxide radical, N,N-di-4-pyridylnitroxide radical, N,N-di-4-pyridazylnitroxide radical, poly(ethylene glycol)-bis-2,2,6,6-tetramethylpiperidinyloxy radical, N-phenyl-N-oxy-tert-butylamine, N-naphthyl-N-oxy-tert-butylamine, N-tert-butyl-N-oxy-2-quinoline, 2,2,6,6-tetramethylpiperidinyloxy radical (TEMPO), 4-hydroxy-2,2,6,6-tetramethylpiperidinyloxy radical, 4-amino-2,2,6,6-tetramethylpiperidinyloxy radical, 4-carboxy-2,2,6,6-tetramethylpiperidinyloxy radical, 4-methoxy-2,2,6,6-tetramethylpiperidinyloxy radical, 4-oxo-2,2,6,6-tetramethylpiperidinyloxy radical, 4-acetamido-2,2,6,6-tetramethylpiperidinyloxy radical, 4-octyloxy-2,2,6,6-tetramethylpiperidinyloxy radical, 2,2,5,5-tetramethylpyrrolidinyloxy radical, 3-carbamoyl-2,2,5,5-tetramethylpyrrolidinyloxy radical, 3-carboxy-2,2,5,5-tetramethylpyrrolidinyloxy radical, 2,2,6,6-tetramethylmorpholine-N-oxyl radical, and 2,2,6,6-tetramethylmorpholinepiperazine-N-oxyl radical.

Examples of the compound represented by Formula (2) above include γ-dimethylbutyrolactam-N-oxidee, ε-dimethyl-valerolactam-N-oxide, 3,4-dihydroquinolin-2-one-N-oxide, 9-methyl-3,4-dihydroquinoline-2-one-N-oxide, 3,3-dimethylisoquinoline-1-one-N-oxide, 3,3-dimethyl-1H-indole-2(3H)-one-N-oxide, 3,3-dimethyl-isoindoline-1-one-N-oxide, and N-t-butylbenzoic acid-N-oxide.

Examples of the compound represented by Formula (3) above include 1α,2α-cyclohexanedicarboimide-N-oxyl, phthalimide-N-oxyl, 3-methyl-phthalimide-N-oxyl, 4-methyl-phthalimide-N-oxyl, 4-carboxy-phthalimide-N-oxyl, naphthalene -2,3-dicarboximide-N-oxyl, pyromellitimide-di-N-oxyl, trihydroxyiminocyanuric acid-N-oxyl, trihydroxyiminocyanuric acid-di-N-oxyl, and trihydroxyiminocyanuric acid-tri-N-oxyl.

Furthermore, as described above, the redox compound may be a polymer compound, and examples of the redox compound include a compound obtained by polymerizing a compound represented by any of Formulas (1) to (3) above. Examples of the polymer compound include a compound obtained by polymerizing 4-acryloyloxy-2,2,6,6-tetramethylpiperidinyloxy radical, 4-methacryloyloxy-2,2,6,6-tetramethylpiperidinyloxy radical, 3-acryloyloxy-2,2,6,6-tetramethylpyrrolidinyloxy radical, 3-methacryloyloxy-2,2,6,6-tetramethylpyrrolidinyloxy radical, 4-vinyloxy-2,2,6,6-tetramethylpiperidinyloxy radical, and 4-vinyloxy-2,2,5,5-tetramethylpyrrolidinyloxy radical as a monomer. Further, the polymer compound may be a compound obtained by polymerizing the monomer alone, or a compound obtained by polymerizing two or more types of the monomers in combination. Further, the polymer compound may be a compound obtained by polymerizing the compound represented by Formula (1) above, or may be a copolymer copolymerized with a copolymerizable monomer such as ethylene, propylene, butadiene, isoprene, styrene, and vinyl acetate. Further, the copolymerizable monomer may be used alone or two or more types of the copolymerizable monomers may be used in combination.

Among the compounds exemplified above, the redox compound is preferably 1,4-di(1-oxy-2,2,6,6-tetramethyl-1-piperidine-4-yloxy)xylene, 4-acetamide-2,2,6,6-tetramethylpiperidine-1-oxyl, or poly(4-methacryloyloxy-2,2,6,6-tetramethylpiperidinyloxyl radical). The redox compound may be used alone or two or more types of the redox compounds may be used in combination.

The compound represented by any of Formulas (1) to (3) above may be a compound obtained by synthesis through a predetermined synthesis method, or may be a commercially available product. The synthesis method is not particularly limited as long as it is a synthesis method by which the compound represented by any of Formulas (1) to (3) above is obtained, and examples of the synthesis method include a method for nitroxidizing in which an amino group of a disubstituted amine compound is oxidized.

Note that "nonvolatile" means that the substance does not evaporate or does not evaporate immediately under normal temperature and normal pressure. For example, in the present description, 2,2,6,6-tetramethylpiperidine-1-oxyl(TEMPO) is not nonvolatile but volatile. From this, as a measure of nonvolatility, for example, a boiling point at normal pressure is higher than 193°C, which is a boiling point of TEMPO, preferably 200°C or higher, and more preferably 220°C or higher. Further, as a measure of nonvolatility, for example, vapor pressure at 20°C is lower than 0.4 hPa (that is, less than 0.4 hPa), which is vapor pressure of TEMPO (20°C), and is preferably lower than 0.2 hPa (that is, less than 0.2 hPa).

The electrolytes 13 and 14 may contain a component other than the electrolytic solution and the redox compound. Examples of another component contained in the electrolytes 13 and 14 include polyethylene glycol, polyacrylate, polymethacrylate, and polyvinyl alcohol acetal.

The electrolytes 13 and 14 are layered and located between the electrodes 11 and 12 and the separator 18 in the carbon dioxide adsorption battery 10. Thickness of the electrolytes 13 and 14 is not particularly limited, but is, for example, preferably 0.1 µm to 2 mm, and more preferably 1 µm to 1 mm. When the electrolyte 13 is too thin, not only a fixed amount and a stored amount of carbon dioxide are simply reduced, but also a minute hole, that is, a pinhole tends to be formed in the electrolytes 13 and 14. When a pinhole is formed, there may be a problem that suitable adsorption of carbon dioxide cannot be performed or a problem that current that does not contribute to adsorption of carbon dioxide flows. Further, when the electrolytes 13 and 14 are too thick, diffusion of carbon dioxide adsorbed to the electrolytes 13 and 14 in the electrolytes 13 and 14 is delayed, and a deviation occurs between a fixed amount and a storage amount of carbon dioxide, so that it tends to be difficult to grasp that carbon dioxide is sufficiently adsorbed at the time of charge. This is considered to be due to a reason below. In the carbon dioxide adsorption battery 10, contribution of diffusion of carbon dioxide and diffusion of the redox compound to which carbon dioxide is bound in the electrolytes 13 and 14 to adsorption of carbon dioxide is larger than contribution of the diffusion to charge. Further, when the electrolytes 13 and 14 are thick, influence of the diffusion becomes larger than when the electrolytes are thin. From these, a difference between when the electrolytes 13 and 14 are thick and when the electrolytes are thin at a rate related to adsorption of carbon dioxide is larger than that of the electrolytes 13 and 14 at a rate related to charge. For this reason, when the electrolytes 13 and 14 are thin, it is easy to grasp that carbon dioxide is sufficiently adsorbed from a storage amount, whereas when the electrolytes 13 and 14 are thick, it is difficult to grasp that carbon dioxide is sufficiently adsorbed from a storage amount because a fixed amount of carbon dioxide and the storage amount are deviated from each other as described above. Therefore, it is considered that it is more difficult to grasp that carbon dioxide is sufficiently adsorbed at the time of charge as the electrolytes 13 and 14 are thicker. Further, for the same reason, when the electrolytes 13 and 14 are too thick, it tends to be difficult to grasp that carbon dioxide is sufficiently released at the time of discharge.

The electrolytes 13 and 14 may include a base material. Examples of the electrolytes 13 and 14 include those in which the base material is impregnated with the electrolytic solution containing the redox compound. Further, examples of the base material include glass fiber filter paper.

A method of manufacturing the electrolyte 13 is not particularly limited as long as the electrolytes 13 and 14 can be manufactured. In a case where the electrolytes 13 and 14 include the base material, for example, a method of dispersing or dissolving the redox compound in the electrolytic solution and impregnating the base material with the electrolytic solution containing the redox compound can be performed. The impregnation is preferably performed while ultrasonic vibration is applied to the electrolytic solution and the base material. In this manner, formation of a minute hole, that is, a pinhole in the electrolyte 13 can be suppressed.

The first electrolyte 13 and the second electrolyte 14 are preferably arranged so as to be plane symmetrical with respect to the separator 18 (plane symmetrical to each other with the separator 18 interposed between them). With this arrangement, it is possible to more reliably adsorb and desorb carbon dioxide from any electrode side of the pair of electrodes by reversing voltage applied between the pair of electrodes 11 and 12. Further, even in a case where voltage applied between the pair of electrodes 11 and 12 is reversed, similar performance can be maintained before and after the reversal. Therefore, it is possible to more reliably and efficiently perform charge while adsorbing carbon dioxide from gas containing carbon dioxide and desorption of the carbon dioxide at the time of discharge as described above.

A ratio of a total amount of carbon dioxide theoretically capable of reacting with the compound (compound capable of absorbing and desorbing carbon dioxide by electrochemical reaction) contained in the electrolytic solution present on the first electrolyte 13 side with respect to the separator 18 to a total amount of carbon dioxide theoretically capable of reacting with the compound (compound capable of absorbing and desorbing carbon dioxide by electrochemical reaction) contained in the electrolytic solution present on the second electrolyte 14 side with respect to the separator 18 (a total amount of carbon dioxide on the first electrolyte 13 side/a total amount of carbon dioxide on the second electrolyte 14 side) is preferably 0.8 to 1.2, more preferably 0.9 to 1.1, and still more preferably 0.95 to 1.05. Further, a total amount of the carbon dioxide on the first electrolyte 13 side with respect to the separator 18 is particularly preferably the same as a total amount of the carbon dioxide on the second electrolyte 14 side with respect to the separator 18. That is, the ratio is particularly preferably 1.

Here, the electrolytic solution present on the first electrolyte 13 side with respect to the separator 18 refers to all the electrolytic solution present on the first electrolyte 13 (or the first electrode 11) side with respect to the separator 18, and specifically, for example, in a case of the carbon dioxide adsorption battery 10 illustrated in FIG. 1, all the electrolytic solution present on the left side with respect to the separator 18. A total amount of carbon dioxide that can theoretically react with the compound contained in the electrolytic solution present on the first electrolyte 13 side with respect to the separator 18 can be obtained from a type and amount of the compound contained in the electrolytic solution present on the first electrolyte 13 side with respect to the separator 18. Further, the electrolytic solution present on the second electrolyte 14 side with respect to the separator 18 refers to all the electrolytic solution present on the second electrolyte 14 (or the second electrode 12) side with respect to the separator 18, and specifically, for example, in a case of the carbon dioxide adsorption battery 10 illustrated in FIG. 1, all the electrolytic solution present on the right side with respect to the separator 18. A total amount of carbon dioxide that can theoretically react with the compound contained in the electrolytic solution present on the second electrolyte 14 side with respect to the separator 18 can be obtained from a type and amount of the compound contained in the electrolytic solution present on the second electrolyte 14 side with respect to the separator 18.

### (Separator)

The separator 18 is not particularly limited as long as it is a separator that suppresses permeation of the compound and is permeable to the electrolytic solution. That is, the separator 18 is less permeable to the compound than to the electrolytic solution. Further, the separator 18 is preferably permeable to the electrolytic solution but not permeable to the compound. The separator 18 is provided so as to separate the first electrolyte 13 and the second electrolyte 14 from each other so as to be permeable to an electrolytic solution but to suppress permeation of the compound. Therefore, the pair of electrodes 11 and 12 are separated by the separator 18. Examples of the separator 18 include a separator generally used in a lithium secondary battery, and in particular, a separator having low resistance to ion migration of an electrolyte and excellent electrolytic solution moisture retention ability is preferable. Examples of a material of the separator include a glass fiber, polyester, polyethylene, polypropylene, and polytetrafluoroethylene (PTFE). A material of the separator may be used alone or two types or more of materials of the separator may be used in combination. Further, the separator 18 is made of a material of the separator 18, and may be a nonwoven fabric or a woven fabric. A pore diameter of the separator 18 is not particularly limited, and is preferably, for example, 0.01 to 10 µm. Further, thickness of the separator 18 is not particularly limited, and is preferably, for example, 5 to 300 µm.

### (Flow path)

Each flow path constituting the pair of flow paths 15 and 16 is not particularly limited as long as it is a flow path through which gas can flow, and examples of the flow path include a flow path through which at least one of carbon dioxide to be adsorb to the compound and carbon dioxide desorbed from the compound can flow. Further, the first flow path 15 is connected to the first electrode 11, and allows gas permeating the first electrode 11 and gas released from the first electrode 11 to flow. Further, the second flow path 16 is connected to the second electrode 12, and allows gas permeating the second electrode 12 and gas released from the second electrode 12 to flow. Further, the pair of flow paths 15 and 16 may include valves 31, 32, 33, and 34 as necessary.

### (Application unit)

As described above, the carbon dioxide adsorption battery 10 may include voltage application units such as the application unit 21 and the application unit 23. The carbon dioxide adsorption battery 10 can be a carbon dioxide concentration device capable of concentrating carbon dioxide by including the application units 21 and 23. That is, a carbon dioxide concentration device including the carbon dioxide adsorption battery 10 and the application units 21 and 23 that apply voltage between the pair of electrodes 11 and 12 is obtained.

The application units 21 and 23 are not particularly limited as long as voltage can be applied between the pair of electrodes 11 and 12. Examples of the application units 21 and 23 include a secondary battery, an external power source, a capacitor, and the like. Further, the application units 21 and 23 are preferably voltage application units capable of switching between high and low potentials of the pair of electrodes 11 and 12. As described above, the carbon dioxide adsorption battery 10 includes, as the application unit 21 and the application unit 23, a voltage application unit capable of switching between high and low potentials of the pair of electrodes 11 and 12, so that a carbon dioxide concentration device capable of efficiently concentrating carbon dioxide can be formed. That is, it is possible to obtain a carbon dioxide concentration device including the carbon dioxide adsorption battery 10, and the application units 21 and 23 that apply voltage between the pair of electrodes 11 and 12, in which the application units 21 and 23 are capable of switching between high and low potentials of the pair of electrodes 11 and 12.

After charging, as illustrated in FIGS. 2 and 4, the carbon dioxide adsorption battery 10 is discharged by providing the resistor 22 between the pair of electrodes 11 and 12 at the time of discharge. The resistor 22 is not particularly limited as long as the carbon dioxide adsorption battery 10 can be discharged.

A method for manufacturing the carbon dioxide adsorption battery 10 is not particularly limited as long as one having the structure described above can be manufactured. Specifically, examples of the method for manufacturing the carbon dioxide adsorption battery 10 include a method of assembling the carbon dioxide adsorption battery 10 by a general assembling method so as to have the structure and the like illustrated in FIGS. 1 to 6 by using the first electrode 11, the second electrode 12, the first electrolyte 13, the second electrolyte 14, the first flow path 15, the second flow path 16, and the separator 18, and further using the application units 21 and 23, the resistor 22, and the like as necessary.

### [Another carbon dioxide adsorption battery]

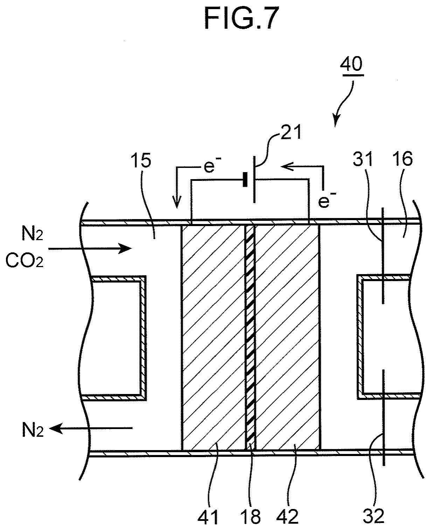

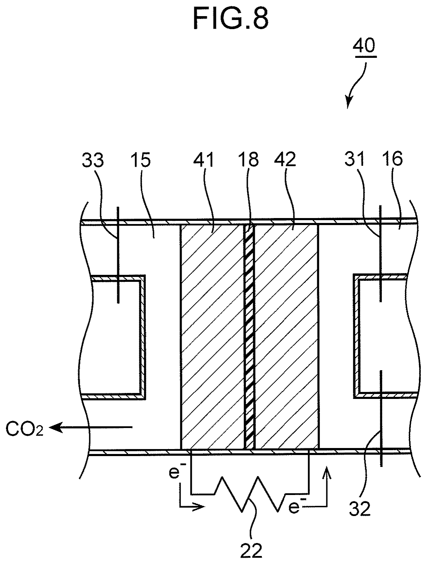

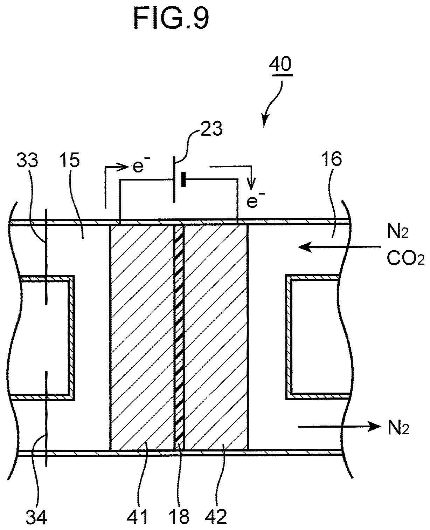

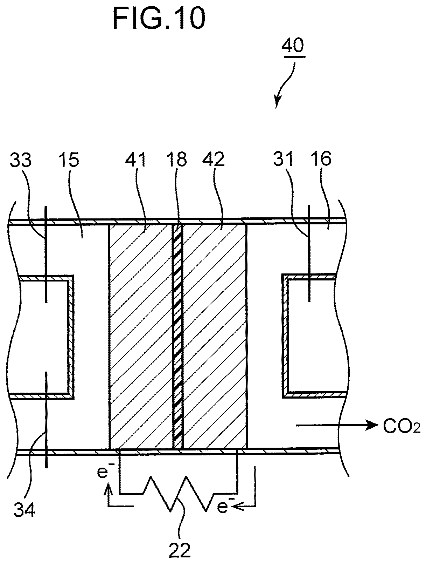

As illustrated in FIGS. 7 to 10, a carbon dioxide adsorption battery 40 according to a second embodiment of the present invention includes a pair of electrodes 41 and 42 (the first electrode 41 and the second electrode 42), a separator 18 arranged between the pair of electrodes 41 and 42, and a pair of flow paths 15 and 16 (the first flow path 15 and the second flow path 16) respectively connected to the pair of electrodes 41 and 42. Each of the pair of electrodes 41 and 42 is an electrode permeable to gas. Then, the pair of electrodes 41 and 42 contain an electrolyte containing an electrolytic solution capable of dissolving carbon dioxide and a compound capable of absorbing and desorbing carbon dioxide by an electrochemical reaction. That is, the carbon dioxide adsorption battery 40 is similar to the carbon dioxide adsorption battery 10 except that the electrolyte is contained in the pair of electrodes 11 and 12. Examples of the first electrode 41 include an electrode in which the first electrolyte 13 is contained in the first electrode 11 in the carbon dioxide adsorption battery 10. Further, examples of the second electrode 42 include an electrode in which the second electrolyte 14 is contained in the second electrode 12 in the carbon dioxide adsorption battery 10. Similarly to the carbon dioxide adsorption battery 10, the carbon dioxide adsorption battery 40 can adsorb and desorb carbon dioxide from both the first electrode 41 and the second electrode 42 by charging illustrated in FIG. 7, discharging illustrated in FIG. 8, charging by electrode reversal illustrated in FIG. 9, charging illustrated in FIG. 10, and the like. Furthermore, in the carbon dioxide adsorption battery 40, similarly to the carbon dioxide adsorption battery 10, by reversing an electrode of voltage applied between the pair of electrodes 41 and 42 (by reversing an electrode and applying voltage) as in charging illustrated in FIG. 7 and charging by electrode reversal illustrated in FIG. 9, carbon dioxide can be adsorbed and desorbed from both the first electrode 41 and the second electrode 42 without discharging, and, further, carbon dioxide can be continuously adsorbed and desorbed at each of the first electrode 41 and the second electrode 42. Therefore, the carbon dioxide adsorption battery 40 can efficiently perform charge while adsorbing carbon dioxide from gas containing carbon dioxide and desorption of the carbon dioxide at the time of discharge. Note that FIG. 7 is a schematic cross-sectional view illustrating an example of a configuration at the time of charge in the carbon dioxide adsorption battery according to the second embodiment of the present invention. FIG. 8 is a schematic cross-sectional view illustrating an example of a configuration at the time of discharge in the carbon dioxide adsorption battery according to the second embodiment of the present invention. FIG. 9 is a schematic cross-sectional view illustrating another example of the configuration at the time of charge in the carbon dioxide adsorption battery according to the second embodiment of the present invention (an example of the configuration at the time of charge by electrode reversal from the time of charging illustrated in FIG. 7). FIG. 10 is a schematic cross-sectional view illustrating another example of the configuration at the time of discharge in the carbon dioxide adsorption battery according to the second embodiment of the present invention (an example of the configuration at the time of discharge after charging by electrode reversal from the time of charging illustrated in FIG. 7).

A method for manufacturing the carbon dioxide adsorption battery 40 is not particularly limited as long as one having the structure described above can be manufactured. Specifically, examples of the method for manufacturing the carbon dioxide adsorption battery 10 include a method of assembling the carbon dioxide adsorption battery 10 by a general assembling method so as to have the structure and the like illustrated in FIGS. 7 to 10 by using the first electrode 41, the second electrode 42, the first flow path 15, the second flow path 16, and the separator 18, and further using the application units 21 and 23, the resistor 22, and the like as necessary. Further, the first electrode 41 can be manufactured, for example, by incorporating the first electrolyte 13 in the first electrode 11 in the carbon dioxide adsorption battery 10. Further, the second electrode 42 can be manufactured, for example, by incorporating the second electrolyte 14 in the second electrode 12 in the carbon dioxide adsorption battery 10.

### [Charge/discharge device]

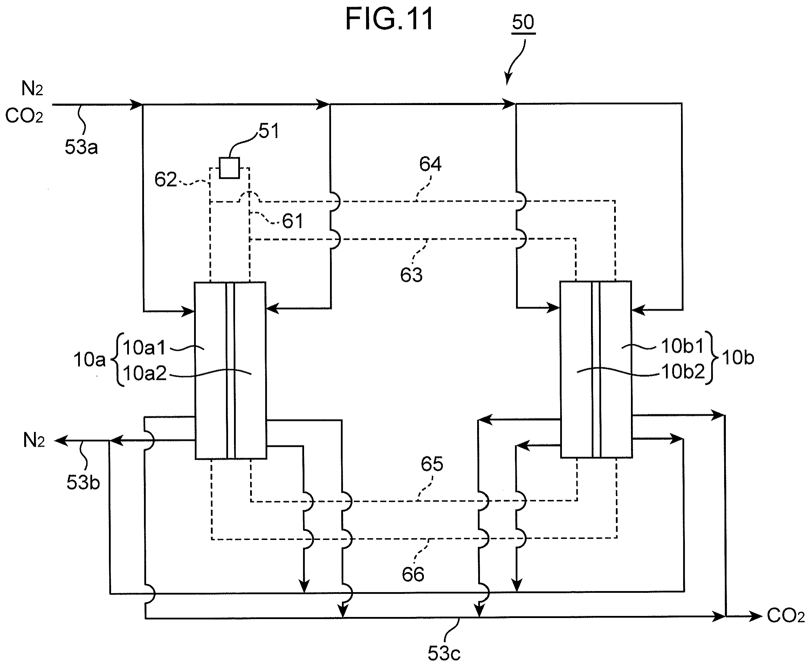

A charge/discharge device according to a third embodiment of the present invention is a charge/discharge device including two or more of the carbon dioxide adsorption batteries. The charge/discharge device is not particularly limited as long as it includes two or more of the carbon dioxide adsorption batteries, and examples of the charge/discharge device include a charge/discharge device 50 as illustrated in FIGS. 11 to 13.

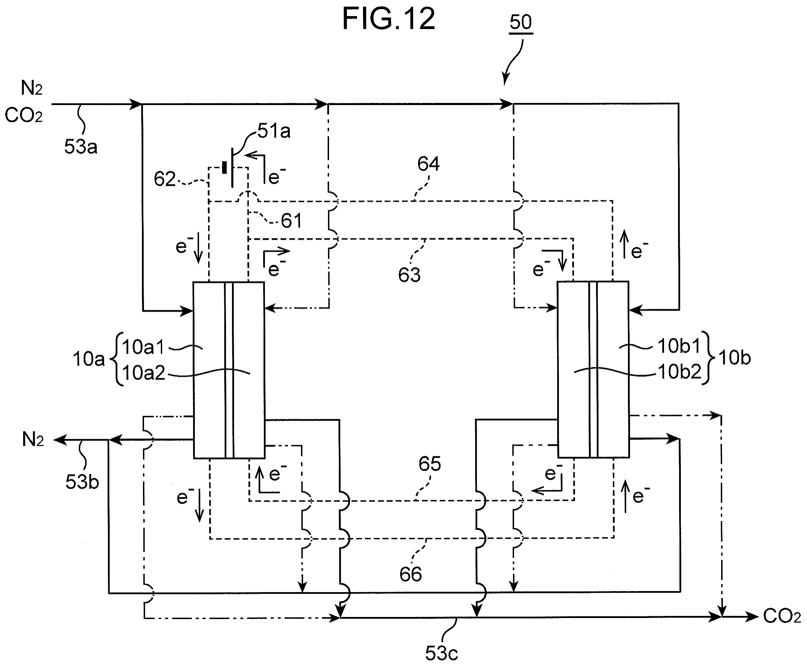

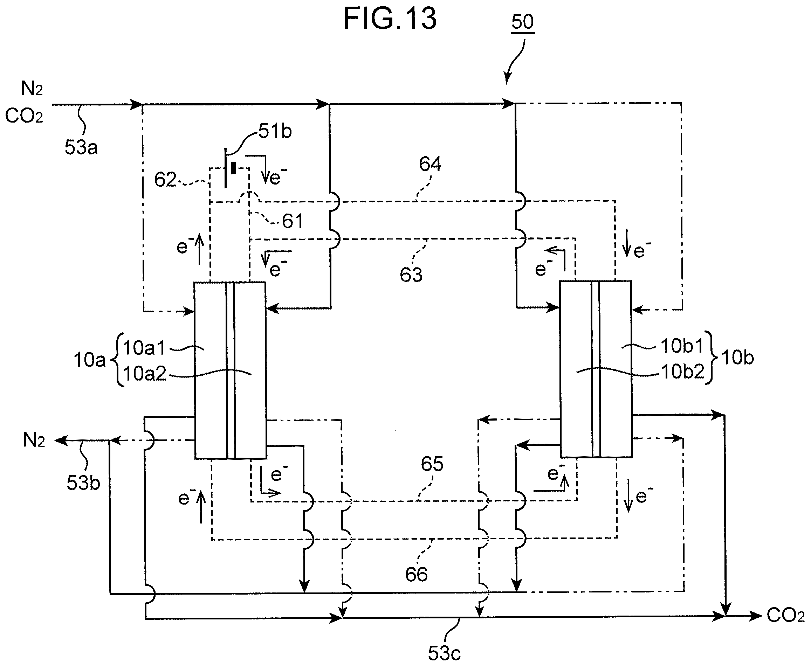

For example, as illustrated in FIGS. 11 to 13, the charge/discharge device 50 includes a first carbon dioxide adsorption battery 10a and a second carbon dioxide adsorption battery 10b. The first carbon dioxide adsorption battery 10a can be charged by connecting a first electrode side 10a1 and a second electrode side 10a2 via an application unit 51. That is, the charge/discharge device 50 can charge the first carbon dioxide adsorption battery 10a by connecting the second electrode side 10a2 of the first carbon dioxide adsorption battery 10a and the application unit 51 by a wiring 61 and connecting the application unit 51 and the first electrode side 10a1 of the first carbon dioxide adsorption battery 10a by a wiring 62. After the first carbon dioxide adsorption battery 10a is charged, the first electrode side 10al of the first carbon dioxide adsorption battery 10a and the first electrode side 10b1 of the second carbon dioxide adsorption battery 10b are connected by a wiring 66, and the second electrode side 10b2 of the second carbon dioxide adsorption battery 10b and the second electrode side 10a2 of the first carbon dioxide adsorption battery 10a are connected by a wiring 65, so that the first carbon dioxide adsorption battery 10a can be discharged and the second carbon dioxide adsorption battery 10b can be charged. After the second carbon dioxide adsorption battery 10b is charged (after the first carbon dioxide adsorption battery 10a is discharged), the first electrode side 10b1 of the second carbon dioxide adsorption battery 10b and the first electrode side 10a1 of the first carbon dioxide adsorption battery 10a are connected by a wiring 64, and the second electrode side 10a2 of the first carbon dioxide adsorption battery 10a and the second electrode side 10b2 of the second carbon dioxide adsorption battery 10b are connected by a wiring 63, so that the second carbon dioxide adsorption battery 10b can be discharged and the first carbon dioxide adsorption battery 10a can be charged. As described above, by temporarily charging the first carbon dioxide adsorption battery 10a, it can act as a charge/discharge device capable of alternately repeating charge and discharge with respect to the second carbon dioxide adsorption battery 10b and the first carbon dioxide adsorption battery 10a. Therefore, the charge/discharge device includes two or more of the carbon dioxide adsorption batteries, so that charge and discharge can be alternately repeated for each of the carbon dioxide adsorption batteries. From the above, this charge/discharge device becomes a charge/discharge device with high energy efficiency. Further, the charge/discharge device can separate carbon dioxide. Note that, in the first carbon dioxide adsorption battery 10a and the second carbon dioxide adsorption battery 10b, carbon dioxide is adsorbed from gas containing carbon dioxide (air containing nitrogen and carbon dioxide, and the like) at the time of charge, and adsorbed carbon dioxide is released at the time of discharge. Note that FIG. 11 is a schematic view illustrating an example of a configuration of the charge/discharge device according to the third embodiment of the present invention. FIG. 12 is a schematic view illustrating an example of a state before electrode reversal in the charge/discharge device according to the third embodiment of the present invention. FIG. 13 is a schematic view illustrating an example of a state after electrode reversal in the charge/discharge device according to the third embodiment of the present invention.

In the charge/discharge device according to the third embodiment of the present invention, as the application unit 51, as illustrated in FIG. 12, when voltage is applied so that potential on the first electrode side 10a1 of the first carbon dioxide adsorption battery 10a is lower than potential on the second electrode side 10a2, gas containing carbon dioxide (air containing nitrogen and carbon dioxide, and the like) is supplied to the first electrode side 10a1 of the first carbon dioxide adsorption battery 10a through a flow path 53a, nitrogen (nitrogen and carbon dioxide not adsorbed) is discharged from the first electrode side 10a1 of the first carbon dioxide adsorption battery 10a through a flow path 53b, and carbon dioxide is discharged from the second electrode side 10a2 of the first carbon dioxide adsorption battery 10a through a flow path 53c. Furthermore, gas containing carbon dioxide (air containing nitrogen and carbon dioxide, and the like) is supplied to the first electrode side 10b1 of the second carbon dioxide adsorption battery 10b through the flow path 53a, nitrogen (nitrogen and carbon dioxide not adsorbed) is discharged from the first electrode side 10b1 of the second carbon dioxide adsorption battery 10b through the flow path 53b, and carbon dioxide is discharged from the second electrode side 10b2 of the second carbon dioxide adsorption battery 10b through the flow path 53c.

In the charge/discharge device according to the third embodiment of the present invention, as the application unit 51, as illustrated in FIG. 13, when voltage is applied so that potential on the second electrode side 10a2 of the first carbon dioxide adsorption battery 10a is lower than potential on the first electrode side 10a1 (that is, electrode reversal is performed from the case illustrated in FIG. 12 and voltage is applied), gas containing carbon dioxide (air containing nitrogen and carbon dioxide, and the like) is supplied to the second electrode side 10a2 of the first carbon dioxide adsorption battery 10a through the flow path 53a, nitrogen (nitrogen and carbon dioxide not adsorbed) is discharged from the second electrode side 10a2 of the first carbon dioxide adsorption battery 10a through the flow path 53b, and carbon dioxide is discharged from the first electrode side 10a1 of the first carbon dioxide adsorption battery 10a through the flow path 53c. Furthermore, gas containing carbon dioxide (air containing nitrogen and carbon dioxide, and the like) is supplied to the second electrode side 10b2 of the second carbon dioxide adsorption battery 10b through the flow path 53a, nitrogen (nitrogen and carbon dioxide not adsorbed) is discharged from the second electrode side 10b2 of the second carbon dioxide adsorption battery 10b through the flow path 53b, and carbon dioxide is discharged from the first electrode side 10b1 of the second carbon dioxide adsorption battery 10b through the flow path 53c.

As described above, the charge/discharge device 50 can adsorb and desorb carbon dioxide from both the first electrode and the second electrode in any carbon dioxide adsorption battery. Therefore, the charge/discharge device 50 is not only a charge/discharge device with high energy efficiency, but also can efficiently perform charge while adsorbing carbon dioxide from gas containing carbon dioxide and desorbing the carbon dioxide at the time of discharge.

As described above, the present description discloses various aspects of the technique, and a main technique is summarized below.

The carbon dioxide adsorption battery according to a first aspect of the present invention is a carbon dioxide adsorption battery including a pair of electrodes, a separator arranged between the pair of electrodes, electrolytes respectively arranged between the pair of electrodes and the separator, and a pair of flow paths respectively connected to the pair of electrodes, in which each of the pair of electrodes is an electrode permeable to gas, and the electrolytes each contain an electrolytic solution capable of dissolving carbon dioxide and a compound capable of absorbing and desorbing carbon dioxide by an electrochemical reaction.

According to such a configuration, it is possible to provide a carbon dioxide adsorption battery capable of efficiently performing charge while adsorbing carbon dioxide from gas containing carbon dioxide and desorption of the carbon dioxide at the time of discharge. This is considered to be due to a reason below.

The pair of electrodes allow gas present around each electrode to permeate. When gas permeates through the electrodes, the gas that permeates through the electrodes comes into contact with the electrode side of the electrolytes. From this, in a case where carbon dioxide is contained in gas present around the electrodes, carbon dioxide is brought into contact with the electrolyte on the side where gas containing carbon dioxide is present. Therefore, since the electrolyte contains an electrolytic solution capable of dissolving carbon dioxide, carbon dioxide is dissolved in the electrolytic solution contained in the electrolyte on the side where gas containing carbon dioxide is present.

In the carbon dioxide adsorption battery, when voltage at which the compound is in a state of being able to adsorb carbon dioxide by an electrochemical reaction in the electrolyte on the side where gas containing carbon dioxide is present is applied between the pair of electrodes, carbon dioxide dissolved in the electrolytic solution is adsorbed to the compound. Further, since a separator provided in the carbon dioxide adsorption battery is less likely to allow the compound to permeate than the electrolytic solution, in the carbon dioxide adsorption battery, permeation of the compound is suppressed more than permeation of the electrolytic solution. That is, the compound is less likely to permeate through the separator than the electrolytic solution. From this, the compound to which carbon dioxide is adsorbed is less likely to migrate to the electrolyte on the side where gas containing carbon dioxide is not present. Therefore, when the carbon dioxide is adsorbed to the compound, the carbon dioxide adsorption battery becomes in a state of being charged. Furthermore, since carbon dioxide dissolved in the electrolytic solution is adsorbed to the compound, dissolution of carbon dioxide in the electrolytic solution is promoted, and the carbon dioxide adsorption battery suitably proceeds to a charged state. From these, as illustrated in FIG. 1, in the carbon dioxide adsorption battery, when gas containing carbon dioxide is allowed to flow through one of the pair of flow paths, and voltage at which the compound becomes in a state of being able to adsorb carbon dioxide by an electrochemical reaction in the electrolyte on the side where the gas containing carbon dioxide flows is applied between the pair of electrodes, carbon dioxide can be adsorbed and charge can be performed. Further, in the carbon dioxide adsorption battery, as described above, since the compound is less likely to permeate through the separator, even if application of voltage between the pair of electrodes is stopped, a state in which carbon dioxide is adsorbed to the compound, that is, a charged state is suitably maintained unless the pair of electrodes are electrically connected and discharge is performed. After the above, as illustrated in FIG. 2, when the pair of electrodes are electrically connected and discharge is performed, the compound is no longer in a state of being able to adsorb carbon dioxide by an electrochemical reaction, and carbon dioxide adsorbed to the compound is desorbed from the compound. Therefore, in the carbon dioxide adsorption battery, at the time of discharge, carbon dioxide is released from the electrode on the side to which carbon dioxide is adsorbed at the time of charge. That is, in the carbon dioxide adsorption battery, carbon dioxide is released at the time of discharge into a flow path (a flow path through which gas containing carbon dioxide is allowed to flow at the time of charge) connected to the electrode on the side to which carbon dioxide is adsorbed at the time of charge, of the pair of flow paths. Gas released from the carbon dioxide adsorption battery at the time of discharge is mainly gas adsorbed to the compound in the carbon dioxide adsorption battery at the time of charge, that is, carbon dioxide, and the gas has very high carbon dioxide concentration. From this, the carbon dioxide adsorption battery can concentrate carbon dioxide.

Furthermore, in the carbon dioxide adsorption battery, discharge in which the pair of electrodes are electrically connected may be performed by reversing voltage applied between the pair of electrodes. By doing so, first, the pair of electrodes are discharged, and gas adsorbed to the compound in the carbon dioxide adsorption battery at the time of charge, that is, carbon dioxide is released. After the above, as illustrated in FIG. 3, in the above state, gas containing carbon dioxide is allowed to flow through a flow path (another flow path) different from a flow path through which gas containing carbon dioxide is allowed to flow at the time of charge between the pair of flow paths, so that carbon dioxide is adsorbed to the compound contained in an electrolyte on the side opposite to an electrolyte on the side where carbon dioxide is adsorbed in the above state with respect to the separator, and charge is performed. Then, after the above, as illustrated in FIG. 4, carbon dioxide can be released by discharge. From these, the carbon dioxide adsorption battery can adsorb and desorb carbon dioxide from either electrode side of the pair of electrodes. Further, by adsorbing and desorbing carbon dioxide from either electrode side of the pair of electrodes, unevenness in usage frequency of the electrode is reduced, so that durability and life of the electrode can be extended.

From the above, the carbon dioxide adsorption battery can efficiently perform charge while adsorbing carbon dioxide from gas containing carbon dioxide and desorption of the carbon dioxide at the time of discharge.

The carbon dioxide adsorption battery according to a second aspect of the present invention is a carbon dioxide adsorption battery including a pair of electrodes, a separator arranged between the pair of electrodes, and a pair of flow paths respectively connected to the pair of electrodes, in which each of the pair of electrodes is an electrode permeable to gas, and the pair of electrodes contain an electrolyte containing an electrolytic solution capable of dissolving carbon dioxide and a compound capable of absorbing and desorbing carbon dioxide by an electrochemical reaction.

According to such a configuration, similarly to the carbon dioxide adsorption battery according to the first aspect of the present invention, it is possible to provide a carbon dioxide adsorption battery capable of efficiently performing charge while adsorbing carbon dioxide from gas containing carbon dioxide and desorption of the carbon dioxide at the time of discharge. This is considered to be due to a reason below.

Since the pair of electrodes contain the electrolyte, gas present around the electrodes is in contact with the electrolyte contained in each of the electrodes. From this, in a case where carbon dioxide is contained in gas present around the electrodes, carbon dioxide is brought into contact with the electrolyte contained in the electrode on the side where gas containing carbon dioxide is present. Therefore, since the electrolyte contains an electrolytic solution capable of dissolving carbon dioxide, carbon dioxide is dissolved in the electrolytic solution contained in the electrolyte on the side where gas containing carbon dioxide is present.

In the carbon dioxide adsorption battery, similarly to the carbon dioxide adsorption battery according to the first aspect of the present invention, when gas containing carbon dioxide is allowed to flow through one of the pair of flow paths, and voltage at which the compound becomes in a state of being able to adsorb carbon dioxide by an electrochemical reaction in the electrolyte on the side where the gas containing carbon dioxide flows is applied between the pair of electrodes, carbon dioxide can be adsorbed and charge can be performed. Furthermore, in the carbon dioxide adsorption battery, since the compound is less likely to permeate through the separator, even if application of voltage between the pair of electrodes is stopped, a state in which carbon dioxide is adsorbed to the compound is maintained, and a charged state is suitably maintained unless the pair of electrodes are electrically connected and discharge is performed. After the above, when the pair of electrodes are electrically connected and discharge is performed, carbon dioxide adsorbed by the compound is desorbed from the compound as in the carbon dioxide adsorption battery according to the first aspect of the present invention. Therefore, in the carbon dioxide adsorption battery, as in the carbon dioxide adsorption battery according to the first aspect of the present invention, carbon dioxide is released at the time of discharge from the electrode on the side where gas containing carbon dioxide is present at the time of charge, and thus the carbon dioxide adsorption battery can concentrate carbon dioxide.

Furthermore, in the carbon dioxide adsorption battery, carbon dioxide is first released, similarly to the carbon dioxide adsorption battery according to the first aspect of the present invention, by reversing voltage applied between the pair of electrodes. After the above, in this state, gas containing carbon dioxide is allowed to flow through a flow path (another flow path) different from a flow path through which gas containing carbon dioxide is allowed to flow at the time of charge between the pair of flow paths, so that carbon dioxide is adsorbed to the compound contained in an electrolyte on the side opposite to an electrolyte on the side where carbon dioxide is adsorbed in the above state with respect to the separator, and charge is performed. From these, the carbon dioxide adsorption battery can adsorb and desorb carbon dioxide from either electrode side of the pair of electrodes. Further, by adsorbing and desorbing carbon dioxide from either electrode side of the pair of electrodes, unevenness in usage frequency of the electrode is reduced, so that durability and life of the electrode can be extended.

From the above, the carbon dioxide adsorption battery can efficiently perform charge while adsorbing carbon dioxide from gas containing carbon dioxide and desorption of the carbon dioxide at the time of discharge.

The carbon dioxide adsorption battery according to a third aspect of the present invention is the carbon dioxide adsorption battery according to the first or second aspect of the present invention, in which the pair of electrodes are arranged so as to be plane symmetrical with respect to the separator.

According to such a configuration, by reversing voltage applied between the pair of electrodes as described above, it is possible to more reliably adsorb and desorb carbon dioxide from either electrode side of the pair of electrodes. Further, even in a case where voltage applied between the pair of electrodes is reversed, similar performance can be maintained before and after the reversal. Therefore, it is possible to more reliably and efficiently perform charge while adsorbing carbon dioxide from gas containing carbon dioxide and desorption of the carbon dioxide at the time of discharge as described above.

The carbon dioxide adsorption battery according to a fourth aspect of the present invention is the carbon dioxide adsorption battery according to any one of the first to third aspects of the present invention, in which the flow paths are flow paths through which at least one of carbon dioxide to be adsorb to the compound and carbon dioxide desorbed from the compound can flow.

According to such a configuration, it is possible to more reliably and efficiently perform charge while adsorbing carbon dioxide from gas containing carbon dioxide and desorption of the carbon dioxide at the time of discharge as described above. That is, in the carbon dioxide adsorption battery, carbon dioxide to be adsorb to the compound can flow through a flow path connected to the electrode on the side where carbon dioxide is adsorbed at the time of charge. Further, carbon dioxide desorbed from the compound can flow through a flow path connected to the electrode on the side where carbon dioxide is adsorbed at the time of discharge. Therefore, in the carbon dioxide adsorption battery, it is possible to more reliably and efficiently perform charge while adsorbing carbon dioxide from gas containing carbon dioxide and desorption of the carbon dioxide at the time of discharge as described above.

A carbon dioxide adsorption battery according to a fifth aspect of the present invention is the carbon dioxide adsorption battery according to any one of the first to fourth aspects of the present invention, in which when voltage is applied between the pair of electrodes, charge is performed and carbon dioxide is adsorbed to the compound, and when the pair of electrodes are electrically connected and discharge is performed, carbon dioxide adsorbed to the compound is desorbed from the compound.

According to such a configuration, it is possible to more reliably and efficiently perform charge while adsorbing carbon dioxide from gas containing carbon dioxide and desorption of the carbon dioxide at the time of discharge as described above.

A carbon dioxide adsorption battery according to a sixth aspect of the present invention is the carbon dioxide adsorption battery according to any one of the first to fifth aspects of the present invention, in which the pair of electrodes include a first electrode and a second electrode, when voltage is applied between the pair of electrodes so that potential of the first electrode is lower than potential of the second electrode, carbon dioxide is taken into the electrolyte from the flow path connected to the first electrode and adsorbed to the compound, and when voltage is applied between the pair of electrodes so that potential of the first electrode is higher than potential of the second electrode, carbon dioxide is taken into the electrolyte from the flow path connected to the second electrode and adsorbed to the compound.

According to such a configuration, by reversing voltage applied between the pair of electrodes as described above, it is possible to more reliably adsorb and desorb carbon dioxide from either electrode side of the pair of electrodes. Therefore, it is possible to more reliably and efficiently perform charge while adsorbing carbon dioxide from gas containing carbon dioxide and desorption of the carbon dioxide at the time of discharge as described above.

The carbon dioxide adsorption battery according to a seventh aspect of the present invention is the carbon dioxide adsorption battery according to any one of the first to sixth aspects of the present invention, in which the compound is a compound in which carbon dioxide is adsorbed by electrolytic reduction of the compound and carbon dioxide is desorbed by electrolytic oxidation of the compound.

According to such a configuration, the carbon dioxide adsorption battery can more efficiently perform charge while adsorbing carbon dioxide from gas containing carbon dioxide and desorption of the carbon dioxide at the time of discharge. This is considered to be due to a reason below.

In the carbon dioxide adsorption battery, in an electrolyte on the side where carbon dioxide is adsorbed, the compound contained in the electrolyte layer is electrolytically reduced to become a reductant. Specifically, in the carbon dioxide adsorption battery, as voltage at which the compound becomes in a state of being able to adsorb carbon dioxide by an electrochemical reaction in the electrolyte on the side where gas containing carbon dioxide flows, voltage by which potential of one electrode in the pair of electrodes is lower than potential of the other electrode is applied. On the side close to the one electrode having lower potential, the compound contained in the electrolyte layer is electrolytically reduced to become a reductant. Carbon dioxide dissolved in the electrolyte is combined with the reductant and taken into the electrolyte. From this, carbon dioxide is taken in from the one electrode side. After the above, when discharge is performed, the compound that becomes a reductant is electrolytically oxidized to return to a state before electrolytic reduction, and carbon dioxide is desorbed from the compound. From this, carbon dioxide is released from the one electrode side. As described above, the compound can suitably adsorb and desorb carbon dioxide to and from the compound. Therefore, the carbon dioxide adsorption battery can more efficiently perform charge while adsorbing carbon dioxide from gas containing carbon dioxide and desorption of the carbon dioxide at the time of discharge.

A carbon dioxide adsorption battery according to an eighth aspect of the present invention is the carbon dioxide adsorption battery according to any one of the first to seventh aspects of the present invention, in which the compound is a compound in which carbon dioxide is adsorbed when potential is relatively low between the pair of electrodes and an electron is received, and carbon dioxide is desorbed when potential is relatively high and an electron is supplied.

According to such a configuration, the carbon dioxide adsorption battery can more efficiently perform charge while adsorbing carbon dioxide from gas containing carbon dioxide and desorption of the carbon dioxide at the time of discharge. This is considered to be due to a reason below.

In the carbon dioxide adsorption battery, as voltage at which the compound becomes in a state of being able to adsorb carbon dioxide by an electrochemical reaction in the electrolyte on the side where gas containing carbon dioxide flows, voltage by which potential of one electrode in the pair of electrodes is lower than potential of the other electrode is applied. When potential of an electrode (one electrode) on the side where carbon dioxide is adsorbed is lower than potential of an electrode (the other electrode) on the side where carbon dioxide is not adsorbed, potential of electrolyte on the side where carbon dioxide is adsorbed is lower than potential at which the compound is reduced, and the compound receives an electron and carbon dioxide is adsorbed and taken into the electrolyte. From this, carbon dioxide is taken in from the one electrode side. After the above, when discharge is performed, in the one electrode, potential of the other becomes the same potential as that of the one electrode. That is, the potential is not lower than potential of the other electrode, and thus the potential is not lower than potential at which the compound is reduced. Therefore, an electron is supplied from the compound to the outside, and carbon dioxide is desorbed from the compound. From this, carbon dioxide is released from the one electrode side. As described above, the compound can suitably adsorb and desorb carbon dioxide to and from the compound. Therefore, the carbon dioxide adsorption battery can more efficiently perform charge while adsorbing carbon dioxide from gas containing carbon dioxide and desorption of the carbon dioxide at the time of discharge.

The carbon dioxide adsorption battery according to a ninth aspect of the present invention is the carbon dioxide adsorption battery according to any one of the first to eighth aspects of the present invention, in which the compound is a redox compound.

According to such a configuration, the carbon dioxide adsorption battery can more efficiently perform charge while adsorbing carbon dioxide from gas containing carbon dioxide and desorption of the carbon dioxide at the time of discharge. This is considered to be due to a reason below.

In the carbon dioxide adsorption battery, as described above, as voltage at which the compound becomes in a state of being able to adsorb carbon dioxide by an electrochemical reaction in the electrolyte on the side where gas containing carbon dioxide flows, voltage by which potential of one electrode in the pair of electrodes is lower than potential of the other electrode is applied. When potential of an electrode (one electrode) on the side where carbon dioxide is adsorbed is lower than potential of an electrode (the other electrode) on the side where carbon dioxide is not adsorbed, potential of electrolyte on the side where carbon dioxide is adsorbed is lower than potential at which the redox compound is reduced, and the redox compound receives an electron and becomes a reductant. Carbon dioxide dissolved in the electrolyte is combined with the reductant and taken into the electrolyte. From this, carbon dioxide is taken in from the one electrode side. After the above, when discharge is performed, in the one electrode, potential of the other becomes the same potential as that of the one electrode. That is, the potential is not lower than potential of the other electrode, and thus the potential is not lower than potential at which the redox compound is reduced. Therefore, an electron is supplied to the outside from the redox compound that becomes a reductant, and the state returns to a state before electrolytic reduction, and carbon dioxide is desorbed from the redox compound. From this, carbon dioxide is released from the one electrode side. As described above, the compound can suitably adsorb and desorb carbon dioxide to and from the compound. Therefore, the carbon dioxide adsorption battery can more efficiently perform charge while adsorbing carbon dioxide from gas containing carbon dioxide and desorption of the carbon dioxide at the time of discharge.

The carbon dioxide adsorption battery according to a tenth aspect of the present invention is the carbon dioxide adsorption battery according to any one of the first to ninth aspects of the present invention, in which the compound is a redox compound having an N-oxy radical group in a molecule.

According to such a configuration, the carbon dioxide adsorption battery can more efficiently perform charge while adsorbing carbon dioxide from gas containing carbon dioxide and desorption of the carbon dioxide at the time of discharge. This is considered to be due to a reason below.

In the carbon dioxide adsorption battery, as described above, as voltage at which the compound becomes in a state of being able to adsorb carbon dioxide by an electrochemical reaction in the electrolyte on the side where gas containing carbon dioxide flows, voltage by which potential of one electrode in the pair of electrodes is lower than potential of the other electrode is applied. When potential of an electrode (one electrode) on the side where carbon dioxide is adsorbed is lower than potential of an electrode (the other electrode) on the side where carbon dioxide is not adsorbed, an electrolyte on the side where carbon dioxide is adsorbed has potential lower than potential at which the redox compound is reduced, and the N-oxy radical group contained in the redox compound is reduced to become an N-oxy anion group. Carbon dioxide dissolved in the electrolyte is bonded to the N-oxy anion group and taken into the electrolyte. From this, carbon dioxide is taken in from the one electrode side. After the above, when discharge is performed, in the one electrode, potential of the other becomes the same potential as that of the one electrode. That is, the potential is not lower than potential of the other electrode, and thus the potential is not lower than potential at which the redox compound is reduced. Therefore, the N-oxy anion group is oxidized to become an N-oxy radical group or an N-oxy cation group, and carbon dioxide is desorbed from the compound. From this, carbon dioxide is released from the one electrode side. As described above, the compound can suitably adsorb and desorb carbon dioxide to and from the compound. Therefore, the carbon dioxide adsorption battery can more efficiently perform charge while adsorbing carbon dioxide from gas containing carbon dioxide and desorption of the carbon dioxide at the time of discharge.

The carbon dioxide adsorption battery according to an eleventh aspect of the present invention is the carbon dioxide adsorption battery according to the tenth aspect of the present invention, in which the redox compound is a compound in which two quaternary carbons are bonded to the N-oxy radical group.

According to such a configuration, the carbon dioxide adsorption battery can further adsorb carbon dioxide from gas containing carbon dioxide, and can further maintain a charged state. Therefore, the carbon dioxide adsorption battery can more adsorb carbon dioxide from gas containing carbon dioxide, be charged together with the adsorption, and more efficiently perform desorption of the carbon dioxide at the time of discharge. This is considered to be due to a reason below. It is considered that the N-oxy radical group can prevent the N-oxy radical group from decomposing by drawing a hydrogen radical from carbon adjacent to the N-oxy radical group. Therefore, it is considered that the redox compound can more suitably adsorb and desorb carbon dioxide.

The carbon dioxide adsorption battery according to a twelfth aspect of the present invention is the carbon dioxide adsorption battery according to any one of the first to eleventh aspects of the present invention, in which the compound is a compound represented by Formula (1) below, a compound represented by Formula (2) below, a compound represented by Formula (3) below, or a compound having a group in which one hydrogen atom is removed from a compound represented by any of Formulas (1) to (3) below in a molecule:

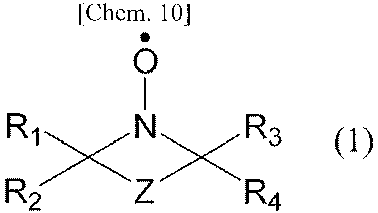

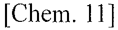

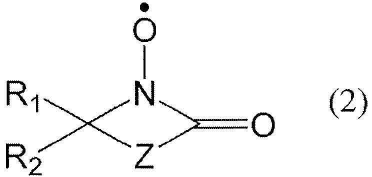

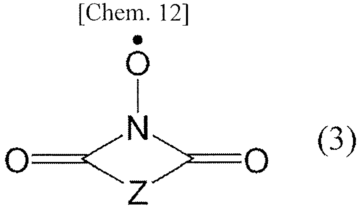

In Formulas (1) to (3), Z represents -CR₅R₆CR₇R₈-, -CR₉R₁₀CR₁₁R₁₂CR₁₃R₁₄-,-(CR₁₅R₁₆)O-, -(CR₁₇R₁₈)NR₂₇-, -(CR₁₉R₂₀)O(CR₂₁R₂₂)-, or -(CR₂₃R₂₄)NR₂₈(CR₂₅R₂₆)-, each of R₁ to R₄ independently represents a substituent, R₁ and R₂ may be bonded to each other to form a ring, R₃ and R₄ may be bonded to each other to form a ring, and each of R₅ to R₂₈ independently represents a hydrogen atom or a substituent.]

According to such a configuration, the carbon dioxide adsorption battery can further adsorb carbon dioxide from gas containing carbon dioxide, and can further maintain a charged state. Therefore, the carbon dioxide adsorption battery can more adsorb carbon dioxide from gas containing carbon dioxide, be charged together with the adsorption, and more efficiently perform desorption of the carbon dioxide at the time of discharge. This is considered to be due to a reason that the redox compound can more suitably adsorb and desorb carbon dioxide. This is considered to be due to a reason that the compound can suppress the N-oxy radical group from decomposing by drawing a hydrogen radical from carbon adjacent to the N-oxy radical group, so that the compound can more suitably adsorb and desorb carbon dioxide.

The carbon dioxide adsorption battery according to a thirteenth aspect of the present invention is the carbon dioxide adsorption battery according to any one of the first to twelfth aspects of the present invention, in which each of the pair of electrodes is made of a conductive material containing at least one selected from a group consisting of a metal fiber, a conductive fiber, a metal particle, conductive ceramic, graphite, a carbon nanotube, activated carbon, and a carbon fiber.

According to such a configuration, the carbon dioxide adsorption battery can further adsorb carbon dioxide from gas containing carbon dioxide, and can further maintain a charged state. That is, the carbon dioxide adsorption battery can more adsorb carbon dioxide from gas containing carbon dioxide, be charged together with the adsorption, and more efficiently perform desorption of the carbon dioxide at the time of discharge. This is considered to be due to a reason that not only voltage can be suitably applied between the pair of electrodes, but also the pair of electrodes can suitably allow carbon dioxide to permeate.

The charge/discharge device according to a fourteenth aspect of the present invention is a charge/discharge device including two or more of the carbon dioxide adsorption batteries according to any one of the first to thirteenth aspects of the present invention.

According to such a configuration, it is possible to provide a charge/discharge device including the carbon dioxide adsorption battery. Further, the charge/discharge device includes two or more of the carbon dioxide adsorption batteries, so that charge and discharge can be alternately repeated for each of the carbon dioxide adsorption batteries. Specifically, first, one of the carbon dioxide adsorption batteries (first battery) is charged. After the above, another one of the carbon dioxide adsorption batteries (second battery) connected to the first battery can be charged by discharging the first battery. After the above, the first battery can be charged by discharging the second battery. As described above, by temporarily charging the first battery, it can be caused to act as a charge/discharge device capable of alternately repeating charge and discharge of the second battery and the first battery. From the above, this charge/discharge device becomes a charge/discharge device with high energy efficiency. Further, in the charge/discharge device, by providing an application unit that applies voltage to the pair of electrodes so as to switch between high and low potentials of the pair of electrodes, carbon dioxide can be adsorbed and desorbed from both the first electrode and the second electrode in both the first battery and the second battery. Therefore, the charge/discharge device is not only a charge/discharge device with high energy efficiency, but also can efficiently perform charge while adsorbing carbon dioxide from gas containing carbon dioxide and desorbing the carbon dioxide at the time of discharge.

The carbon dioxide concentration device according to a fifteenth aspect of the present invention is the carbon dioxide concentration device including the carbon dioxide adsorption battery according to any one of the first to thirteenth aspects of the present invention, and an application unit that applies voltage between the pair of electrodes, in which the application unit is capable of switching between high and low potentials of the pair of electrodes.

According to such a configuration, it is possible to provide a carbon dioxide concentration device including the carbon dioxide adsorption battery. The carbon dioxide concentration device includes the carbon dioxide adsorption battery according to any one of the first to twelfth aspects of the present invention, and an application unit that applies voltage between the pair of electrodes in the carbon dioxide adsorption battery, in which the application unit is capable of switching between high and low potentials of the pair of electrodes. From this, the carbon dioxide concentration device can adsorb and desorb carbon dioxide from either electrode side of the pair of electrodes, and can efficiently concentrate carbon dioxide.

According to the present invention, it is possible to provide a carbon dioxide adsorption battery capable of efficiently performing charge while adsorbing carbon dioxide from gas containing carbon dioxide and desorption of the carbon dioxide at the time of discharge. Further, according to the present invention, a charge/discharge device and a carbon dioxide concentration device including the carbon dioxide adsorption battery can be provided.

Hereinafter, the present invention will be specifically described with reference to Examples, but the present invention is not limited to these.

### Examples

### [Example 1]

### <Production of carbon dioxide adsorption battery>

A carbon dioxide adsorption battery having the structure illustrated in FIGS. 1 to 4 was produced by a procedure below.

### (Electrolyte: first electrolyte and second electrolyte)

To 100.0 g of dimethylformamide (manufactured by FUJIFILM Wako Pure Chemical Corporation), 6.5 g of Poly(vinylidenefluoride-co-hexafluoropropylene) (manufactured by Sigma-Aldrich Co. LLC) was added, and the mixture was stirred at 80°C for 3 hours for dissolution. Next, to the obtained solution, 24.0 g of a compound [poly(4-methacryloyloxy-2,2,6,6-tetramethylpiperidinyloxy radical)] (nonvolatile) obtained by polymerization by a conventional anionic polymerization method using 4-methacryloyloxy-2,2,6,6-tetramethylpiperidinyloxy radical (manufactured by Tokyo Chemical Industry Co., Ltd.) which was the redox compound as a monomer was added, and the mixture was stirred at 80°C for 3 hours for dissolution. Next, 12.9 g of ionic liquid [1-ethyl-3-methylimidazolium bis(fluorosulfonyl)imide (nonvolatile) (emimFSI manufactured by Sigma-Aldrich Co. LLC)] which is an electrolytic solution capable of dissolving carbon dioxide was added to the obtained solution, the mixture is heated to 40°C, and stirred and mixed for 3 hours. Using the liquid thus obtained, a liquid film having thickness of 500 µm was prepared on a glass plate by an applicator, and dried under reduced pressure at 60°C for 8 hours. The dried film obtained by the drying was peeled off the glass plate. By doing so, a dried film having thickness of 100 µm was obtained. The obtained dried film was cut into size of 20 mm in length × 24 mm in width and used as an electrolyte (electrolyte layer). When the obtained electrolyte layer was visually checked, a fine hole (pinhole) could not be observed.

### (Pair of electrodes: first electrode and second electrode)

A plurality of pieces of carbon paper (GDL35BC manufactured by SGL CARBON Japan Ltd.) were cut into size of 30 mm in length × 30 mm in width × 1 mm in thickness.

As the first electrode and the second electrode, one obtained by sticking a conductive copper foil tape (used as a tab) to one surface of the cut-out carbon paper was used.

### (Separator)

As the separator, a polypropylene separator (Celgard#2400 manufactured by Polypore Co., Ltd.) cut into size of 30 mm in length × 30 mm in width was used.

### (Flow path)

A resin plate made of polytetrafluoroethylene was cut into size of 50 mm in length × 50 mm in width × 5 mm in thickness, and two holes were made at appropriate positions. A groove having depth of 1 mm × length of 20 mm × width of 20 mm connected to the hole was dug in the cut-out resin plate. This was used as a flow path.

### (Carbon dioxide adsorption battery)

A carbon dioxide adsorption battery having the structure as illustrated in FIGS. 1 to 4, in which a flow path was formed both on the first electrode side and the second electrode side, was manufactured by laminating the electrolyte layer on both surfaces of the separator, further laminating the first electrode on one side and the second electrode on the other side of the laminated separator, and further assembling the flow path on both surfaces of the laminated separator. Then, in the carbon dioxide adsorption battery, at the time of charge, as illustrated in FIG. 1, a power source as an application unit was connected to a conductive copper foil tape of the first electrode and a conductive copper foil tape of the second electrode. Further, in the carbon dioxide adsorption battery, as illustrated in FIG. 2, a resistor was connected to the conductive copper foil tape of the first electrode and the conductive copper foil tape of the second electrode at the time of discharge. Note that since the first electrode and the second electrode use the same electrode as described above, the first electrode and the second electrode have the same material, thickness, and BET specific surface area. Further, since the same electrolyte layer is laminated on both surfaces of the separator, a total amount of carbon dioxide that can theoretically react with the compound contained in an electrolytic solution present on one electrolyte (first electrolyte) side of the separator is substantially the same as a total amount of carbon dioxide that can theoretically react with the compound contained in an electrolytic solution present on another electrolyte (second electrolyte) side of the separator. Further, since the first electrode and the second electrode are laminated on the electrolyte layers after the same electrolyte layers are laminated on both surfaces of the separator, the first electrode and the second electrode are arranged so as to be plane symmetrical with respect to the separator. Further, the first electrolyte and the second electrolyte are also arranged so as to be plane symmetrical with respect to the separator.

### [Evaluation]

The carbon dioxide adsorption battery was evaluated by an evaluation method below.

### (First charge and discharge: carbon dioxide adsorption and desorption test)

First, the carbon dioxide adsorption battery was installed in an environment of room temperature (28°C), and a gas bag filled with mixed gas of carbon dioxide and nitrogen was attached to a hole of a flow path on the first electrode side. A gas bag filled with mixed gas of carbon dioxide and nitrogen was also attached to a hole of a flow path on the second electrode side. A portable carbon dioxide gas concentration meter (CGP-31 manufactured by DKK-TOA CORPORATION) was attached to each of the hole of the flow path on the first electrode side and the hole of the flow path on the second electrode side. Carbon dioxide concentration measured at the time of attachment was 0.4% (4000ppm). Then, by adjusting the power source, charge is performed until voltage reached 4 V at constant current of 0.25 mA between the pair of electrodes (between the first electrode and the second electrode), and then discharge is performed to 0 V to measure a discharge characteristic of the carbon dioxide adsorption battery. Specifically, a discharge characteristic of the carbon dioxide adsorption battery was measured (discharge rate characteristics evaluation) as described below.

### (Discharge capacity characteristic evaluation)

Using a charge and discharge test device (TOSCAT manufactured by Toyo System Co., Ltd.), the carbon dioxide adsorption battery was subjected to constant current charge at 2.5 mA until voltage reached 4 V, and then to constant voltage charge at 4 V until 0.25 mA is reached. After the above, constant current discharge was performed up to 0 V at discharge current (2.5 mA), and discharge capacity (mAh/g) at that time was measured. Note that the discharge capacity was obtained as capacity per weight of a radical material in order to easily compare efficiency of the radical material.

When the discharge rate characteristic evaluation was measured, residual carbon dioxide concentration (CO₂ concentration after charge) was measured with a portable carbon dioxide gas concentration meter (CGP-31 manufactured by DKK-TOA CORPORATION) attached to the hole of the flow path on the first electrode side after the charge is finished. Further, after the discharge, carbon dioxide concentration (CO₂ concentration after discharge) was measured with a portable carbon dioxide gas concentration meter attached to the hole of the flow path on the first electrode side.

### (Second charge and discharge: carbon dioxide adsorption and desorption test)

Next, in the carbon dioxide adsorption battery, at the time of charge, as illustrated in FIG. 3, a power source as an application unit was connected to a conductive copper foil tape of the first electrode and a conductive copper foil tape of the second electrode. Further, in the carbon dioxide adsorption battery, as illustrated in FIG. 4, a resistor was connected to the conductive copper foil tape of the first electrode and the conductive copper foil tape of the second electrode at the time of discharge. Charge and discharge were performed and behavior of carbon dioxide was observed under the same conditions as in the first charge and discharge except for the connection as described above.

A result of these is shown in Table 1.

### [Example 2]

A carbon dioxide adsorption battery was manufactured in the same manner as in Example 1 except that 42.9 g of 1-butyl-3-methylimidazolium bis(trifluoromethylsulfonylimide) was used as an electrolytic solution (ionic liquid) capable of dissolving carbon dioxide in place of 1-ethyl-3-methylimidazolium bis(fluorosulfonyl)imide. Then, using the obtained carbon dioxide adsorption battery, the same evaluation as in Example 1 was performed.

A result of these is shown in Table 1.

### [Example 3]

A carbon dioxide adsorption battery was manufactured in the same manner as in Example 1 except that an electrode below was used instead of the cut-out carbon paper as the first electrode and the second electrode. Then, using the obtained carbon dioxide adsorption battery, the same evaluation as in Example 1 was performed.

A result of these is shown in Table 1.

Activated carbon (YP-50 manufactured by Kuraray Co., Ltd.), styrene-butadiene rubber (SBR) (TRD2001 manufactured by JSR Corporation), carboxymethyl cellulose (CMC) (Celogen BSH manufactured by DAI-ICHI KOGYO SEIYAKU CO., LTD.), and carbon black (Super-P manufactured by TIMCAL Graphite & Carbon) were mixed with water at activated carbon:SBR:CMC:carbon black = 90:3:2:5 (mass ratio) to obtain slurry. A mesh made of stainless steel (stainless steel mesh, stainless steel 304, mesh number 635, manufactured by Kureha Co., Ltd.) was used instead of carbon paper, and the obtained slurry was applied to the mesh made of stainless steel with a bar coater, and then dried at 150°C for 7 hours in a reduced pressure atmosphere using a glass tube oven to obtain an activated carbon coated electrode (activated carbon portion thickness: 150 µm). This electrode was used as the first electrode and the second electrode.

### [Comparative Example 1]

In 30.0 g of toluene, 28.4 g of a compound [poly(4-methacryloyloxy-2,2,6,6-tetramethylpiperidinyloxy radical)] (nonvolatile) obtained by polymerization by a conventional anionic polymerization method using 4-methacryloyloxy-2,2,6,6-tetramethylpiperidinyloxy radical (manufactured by Tokyo Chemical Industry Co., Ltd.) which was the redox compound as a monomer was dissolved. The solution thus obtained was dropped on the entire surface of a glass fiber filter paper (GC50 manufactured by ADVANTEC Co., Ltd.). After the above, the glass fiber filter paper on which the solution was dropped was dried under a nitrogen atmosphere. By doing so, toluene was removed, and a solid electrolyte layer was obtained. A device was manufactured in the same manner as in Example 1 except that this solid electrolyte layer containing no electrolytic solution capable of dissolving carbon dioxide was used. Then, the same evaluation as in Example 1 was performed using the obtained device. Note that it was confirmed that no gas was leaked from the flow path formed on the second electrode side. Further, since this device does not adsorb carbon dioxide and does not store electricity, it is simply referred to as a device.

A result of these is shown in Table 1.

### [Comparative Example 2]

A carbon dioxide adsorption battery was manufactured in the same manner as in Example 1 except that a redox compound was not added. Then, using the obtained carbon dioxide adsorption battery, the same evaluation as in Example 1 was performed. Note that it was confirmed that no gas was leaked from the flow path formed on the second electrode side. Further, since this device does not adsorb carbon dioxide and does not store electricity, it is simply referred to as a device.

A result of these is shown in Table 1.

### [Comparative Example 3]

A carbon dioxide adsorption battery was manufactured in the same manner as in Example 1 except that no flow path was provided on the second electrode side. Then, using the obtained carbon dioxide adsorption battery, the same evaluation as in Example 1 was performed.

A result of these is shown in Table 1.

Note that, in Table 1, "-" in a column of discharge capacity indicates that electricity could not be stored (charged state could not be maintained).

**[Table 1]**

| | First charge and discharge | | | | | | |
|---|---|---|---|---|---|---|---|
| | CO₂ concentration before charge (ppm) | | CO₂ concentration after charge (ppm) | | CO₂ concentration after discharge (ppm) | | Discharge capacity (mAh/g) |
| | First electrode side | Second electrode side | First electrode side | Second electrode side | First electrode side | Second electrode side | |
| Example 1 | 4000 | 4000 | 1200 | 4000 | 3890 | 4000 | 98 |
| Example 2 | 4000 | 4000 | 1320 | 4000 | 3991 | 4000 | 96 |
| Example 3 | 4000 | 4000 | 1120 | 4000 | 3915 | 4000 | 109 |
| Comparative Example 1 | 4000 | 4000 | 4000 | 4000 | 4000 | 4000 | - |
| Comparative Example 2 | 4000 | 4000 | 4000 | 4000 | 4000 | 4000 | - |
| Comparative Example 3 | 4000 | Unmeasurable | 1200 | Unmeasurable | 3890 | Unmeasurable | 98 |

| | Second charge and discharge | | | | | | |
|---|---|---|---|---|---|---|---|
| | CO₂ concentration before charge (ppm) | | CO₂ concentration after charge (ppm) | | CO₂ concentration after discharge (ppm) | | Discharge capacity (mAh/g) |
| | First electrode side | Second electrode side | First electrode side | Second electrode side | First electrode side | Second electrode side | |
| Example 1 | 3890 | 4000 | 3890 | 1320 | 3890 | 3990 | 96 |
| Example 2 | 3991 | 4000 | 3991 | 1400 | 3991 | 3965 | 94 |
| Example 3 | 3915 | 4000 | 3915 | 1080 | 3915 | 3908 | 110 |
| Comparative Example 1 | 4000 | 4000 | 4000 | 4000 | 4000 | 4000 | - |
| Comparative Example 2 | 4000 | 4000 | 4000 | 4000 | 4000 | 4000 | - |
| Comparative Example 3 | 3890 | Unmeasurable | 3890 | Unmeasurable | 3890 | Unmeasurable | 96 |

As can be seen from Table 1, the carbon dioxide adsorption battery (Examples 1 to 3) as a battery including the pair of electrodes, the separator, the electrolyte, and the pair of flow paths, in which each of the pair of electrodes was an electrode permeable to gas, and the electrolyte contains an electrolytic solution capable of dissolving carbon dioxide and a compound capable of absorbing and desorbing carbon dioxide by an electrochemical reaction, could be charged and discharged. Further, it was found that the carbon dioxide adsorption battery according to Examples 1 to 3 can adsorb and desorb carbon dioxide from both the first electrode and the second electrode, unlike the case (Comparative Examples 1 to 3) not having this configuration.

### [Example 4]

A device was manufactured in the same manner as in Example 1. Then, using the obtained device, charge (charge illustrated in FIG. 5) under the same conditions as charge in the first charge and discharge was performed, and after that, charge (charge illustrated in FIG. 6) under the same conditions as charge in the second charge and discharge was performed without discharge. Charge was performed under such a condition, and behavior of carbon dioxide was observed.

### [Comparative Example 4]

A carbon dioxide adsorption battery was manufactured in the same manner as in Example 1 except that no flow path was provided on the second electrode side in the first charge. Then, using the obtained carbon dioxide adsorption battery, the same evaluation as in Example 4 was performed.

A result of these is shown in Table 2.

**[Table 2]**

| | CO₂ concentration before charge | | CO₂ concentration after first charge | | CO₂ concentration after second charge | |
|---|---|---|---|---|---|---|
| | First electrode side | Second electrode side | First electrode side | Second electrode side | First electrode side | Second electrode side |
| Example 4 | 4000 | 4000 | 1200 | 4000 | 3890 | 1320 |
| Comparative Example 4 | 4000 | Unmeasurable | 1200 | Unmeasurable | 3890 | Unmeasurable |

As can be seen from Table 2, it was found that the carbon dioxide adsorption battery (Example 4) as a battery including the pair of electrodes, the separator, the electrolyte, and the pair of flow paths, in which each of the pair of electrodes is an electrode permeable to gas, and the electrolyte contains an electrolytic solution capable of dissolving carbon dioxide and a compound capable of absorbing and desorbing carbon dioxide by an electrochemical reaction, can adsorb and desorb carbon dioxide from both the first electrode and the second electrode by performing the charge illustrated in FIG. 5 and the charge illustrated in FIG. 6 without discharge performed between them.

This application is based on Japanese Patent Application No. 2023-078888 filed on May 11, 2023, the contents of which are included in the present application.

Although the present invention is appropriately and fully described above through the embodiment in order to express the present invention, it should be recognized that a person skilled in the art can easily modify and/or improve the above-described embodiment. Therefore, unless a changed embodiment or improved embodiment made by a person skilled in the art is at a level that departs from the scope of the claims described in the claims, the changed embodiment or improved embodiment is interpreted to be included in the scope of the claims.

### Industrial Applicability

According to the present invention, there is provided a carbon dioxide adsorption battery capable of efficiently performing charge while adsorbing carbon dioxide from gas containing carbon dioxide and desorption of the carbon dioxide at the time of discharge. Further, according to the present invention, a charge/discharge device and a carbon dioxide concentration device including the carbon dioxide adsorption battery are provided.

## Claims

1. A carbon dioxide adsorption battery comprising:
a pair of electrodes;
a separator arranged between the pair of electrodes;
electrolytes respectively arranged between the pair of electrodes and the separator; and
a pair of flow paths respectively connected to the pair of electrodes, wherein
each of the pair of electrodes is an electrode permeable to gas, and
the electrolytes each contain an electrolytic solution capable of dissolving carbon dioxide and a compound capable of absorbing and desorbing carbon dioxide by an electrochemical reaction.

2. A carbon dioxide adsorption battery comprising:
a pair of electrodes;
a separator arranged between the pair of electrodes; and
a pair of flow paths respectively connected to the pair of electrodes, wherein
each of the pair of electrodes is an electrode permeable to gas, and
the pair of electrodes contain an electrolyte containing an electrolytic solution capable of dissolving carbon dioxide and a compound capable of absorbing and desorbing carbon dioxide by an electrochemical reaction.

3. The carbon dioxide adsorption battery according to claim 1 or 2, wherein the pair of electrodes are arranged so as to be plane symmetrical with respect to the separator.

4. The carbon dioxide adsorption battery according to claim 1 or 2, wherein the flow paths are flow paths through which at least one of carbon dioxide to be adsorb to the compound and carbon dioxide desorbed from the compound can flow.

5. The carbon dioxide adsorption battery according to claim 1 or 2, wherein
when voltage is applied between the pair of electrodes, charge is performed and carbon dioxide is adsorbed to the compound, and
when the pair of electrodes are electrically connected and discharge is performed, carbon dioxide adsorbed to the compound is desorbed from the compound.

6. The carbon dioxide adsorption battery according to claim 1 or 2, wherein
the pair of electrodes include a first electrode and a second electrode,
when voltage is applied between the pair of electrodes so that potential of the first electrode is lower than potential of the second electrode, carbon dioxide is taken into the electrolyte from the flow path connected to the first electrode and adsorbed to the compound, and
when voltage is applied between the pair of electrodes so that potential of the first electrode is higher than potential of the second electrode, carbon dioxide is taken into the electrolyte from the flow path connected to the second electrode and adsorbed to the compound.

7. The carbon dioxide adsorption battery according to claim 1 or 2, wherein the compound is a compound in which carbon dioxide is adsorbed by electrolytic reduction of the compound and carbon dioxide is desorbed by electrolytic oxidation of the compound.

8. The carbon dioxide adsorption battery according to claim 1 or 2, wherein the compound is a compound in which carbon dioxide is adsorbed when potential is relatively low between the pair of electrodes and an electron is received, and carbon dioxide is desorbed when potential is relatively high and an electron is supplied.

9. The carbon dioxide adsorption battery according to claim 1 or 2, wherein the compound is a redox compound.

10. The carbon dioxide adsorption battery according to claim 1 or 2, wherein the compound is a redox compound having an N-oxy radical group in a molecule.

11. The carbon dioxide adsorption battery according to claim 10, wherein the redox compound is a compound in which two quaternary carbons are bonded to the N-oxy radical group.

12. The carbon dioxide adsorption battery according to claim 1 or 2, wherein
the compound is a compound represented by following Formula (1), a compound represented by following Formula (2), a compound represented by following Formula (3), or a compound having a group in which one hydrogen atom is removed from a compound represented by any of following Formulas (1) to (3) in a molecule: 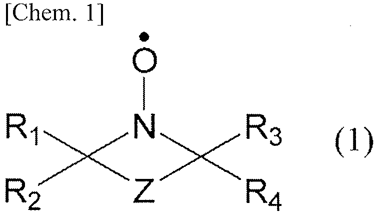 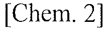 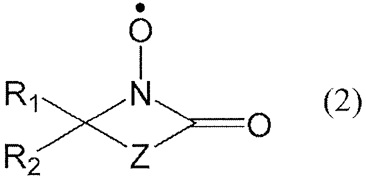 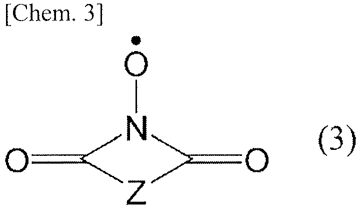 [in Formulas (1) to (3), Z represents -CR₅R₆CR₇R₈-, -CR₉R₁₀CR₁₁R₁₂CR₁₃R₁₄-, -(CR₁₅R₁₆)O-, - (CR₁₇R₁₈)NR₂₇-, -(CR₁₉R₂₀)O(CR₂₁R₂₂)-, or -(CR₂₃R₂₄)NR₂₈(CR₂₅R₂₆)-, each of R₁ to R₄ independently represents a substituent, R₁ and R₂ may be bonded to each other to form a ring, R₃ and R₄ may be bonded to each other to form a ring, and each of R₅ to R₂₈ independently represents a hydrogen atom or a substituent.]

13. The carbon dioxide adsorption battery according to claim 1 or 2, wherein each of the pair of electrodes is made of a conductive material containing at least one selected from a group consisting of a metal fiber, a conductive fiber, a metal particle, conductive ceramic, graphite, a carbon nanotube, activated carbon, and a carbon fiber.

14. A charge/discharge device comprising two or more of the carbon dioxide adsorption batteries according to claim 1 or 2.

15. A carbon dioxide concentration device comprising:
the carbon dioxide adsorption battery according to claim 1 or 2; and
an application unit that applies voltage between the pair of electrodes, wherein
the application unit is capable of switching between high and low potentials of the pair of electrodes.
